(19) Europäisches Patentamt

European Patent Office

Office européen des brevets

(11) **EP 1 310 845 B1**

(12) **EUROPEAN PATENT SPECIFICATION**

(45) Date of publication and mention
of the grant of the patent:
**09.11.2005 Bulletin 2005/45**

(51) Int Cl.⁷: **G05B 19/418**

(86) International application number:
**PCT/JP2001/006484**

(21) Application number: **01953321.5**

(22) Date of filing: **26.07.2001**

(87) International publication number:
**WO 2002/010872 (07.02.2002 Gazette 2002/06)**

(54) **PRODUCTION PLANNING METHOD AND SYSTEM FOR PREPARING PRODUCTION PLAN**

PRODUKTIONSPLANUNGSVERFAHREN UND VORRICHTUNG ZUR VORBEREITUNG EINES
PRODUKTIONSPLANS

PROCEDE DE PLANIFICATION DE PRODUCTION ET SYSTEME DE PREPARATION D'UN PLAN
DE PRODUCTION

(84) Designated Contracting States:
**DE FR GB IT**

(30) Priority: **28.07.2000 JP 2000228804
31.07.2000 JP 2000231188
02.08.2000 JP 2000234858**

(43) Date of publication of application:
**14.05.2003 Bulletin 2003/20**

(73) Proprietor: **TEIJIN LIMITED
Osaka-shi Osaka 541-0054 (JP)**

(72) Inventors:
 • **KURIHARA, Hideshi, c/o Teijin Limited
 Matsuyama-shi, Ehime 791-8041 (JP)**
 • **IIMURO, Hiroyuki, c/o Teijin Limited
 Matsuyama-shi, Ehime 791-8041 (JP)**
 • **OSAGAWA, Kenichi, c/o Teijin Limited
 Tokyo 100-0011 (JP)**

 • **TANAKA, Yasuhiro, c/o Teijin Limited
 Osaka-shi, Osaka 541-0054 (JP)**
 • **HIROTA, Masashi, c/o KITASEN LIMITED
 Kaga-shi, Ishikawa 922-0004 (JP)**
 • **MORIOKA, Tsutomu,
 c/o INFOCOM CORPORATION
 Osaka-shi, Osaka 541-0054 (JP)**
 • **UETANI, Hideaki, c/o Teijin WOW Limited
 Osaka-shi, Osaka 541-0054 (JP)**

(74) Representative: **HOFFMANN EITLE
Patent- und Rechtsanwälte
Arabellastrasse 4
81925 München (DE)**

(56) References cited:
 **EP-A- 0 639 815         JP-A- 4 364 571
 JP-A- 6 096 089         JP-A- 9 120 424
 JP-A- 10 118 898         JP-A- 11 000 852**

EP 1 310 845 B1

**Description**

TECHNICAL FIELD

This invention relates to a production method and a production plan creation system for the creation of production plans.

One embodiment relates in particular to a production method and system for the creation of production plans, which can easily accommodate demand trends and customer requests.

Another embodiment relates in particular to production plans for products which are produced via a plurality of steps after an order is received, and more specifically, relates in particular to a production method and system for the creation of production plans for products which are produced via a plurality of steps after receiving an order, and which enable the efficient use of production space in the production plant.

BACKGROUND ART

EP 0 639 815 A2 discloses in combination the technical features of the pre-characterizing part of claims 1 and 14 below.

Products undergo trends in popularity, as in the case of clothes and automobiles; and it is important that the suppliers of products experiencing such trends grasp product trends ahead of time and create production plans so as to satisfy the time of delivery requested by customers.

Technology to create such production plans using information processing systems have previously been proposed.

For example, such technology is described in Japanese Patent Laid-open No. 9-120424. This technology is based on the retail store characteristics and merchandise characteristics of specific merchandise, and attempts to improve the efficiency of the merchandise sales and production system between merchandise retail stores and manufacturers by appropriately selecting combinations of sales types and production types of specific merchandise.

That is, the lead time and allowable inventory amount are determined from retail store characteristic information and merchandise characteristic information, and inventory sales or order-based sales, as well as planned production or order-based production, are selected. Accordingly, the sale and production type are selected with regard to orders and inventory.

In particular, where automobile products are concerned there are trends in popularity, but the period over which popularity can be maintained is in units of years at least. Hence in such automobile production, there are many cases in which the inventory to be considered consists of finished products, and parts are used in common.

However, there are cases in which a part or material is prepared in association with a final product. For example, when the final product is cloth, moving from upstream to downstream, there exist a plurality of production steps, such as yarns, twisted yarns, weaving, knitting, and dyeing. And the further the step is downstream, the stronger is the association with the final product.

Further, when the final product is clothing or clothing fabrics, trends in popularity become prominent, and the period over which popularity can be maintained is often one season of a given year.

Also, in order to accommodate these trends in popularity, by holding inventory in production steps closer to the final product it is possible to achieve shorter times to delivery and increase customer satisfaction. But on the other hand, when a final product does not agree with popularity trends, large dead inventories of products may result.

The technology described in the above patent publication cannot be applied to production modes which have such special characteristics.

In a plant such as a weaving and dyeing plant in the fiber industry that performs processing of numerous product types using numerous steps, where production is performed after an order is received, there are a plurality of steps for processing a single product, and each product needs different steps, together with the procurement of raw materials, it is important that a production plan determine how limited production (processing) space for each step is allocated and employed for a plurality of orders.

Conventionally, a method is frequently employed in which when an order is received, production of the order is allocated to the production space that is available for use at the earliest time, in a sequential order beginning from the first step necessary for the production. That is, production space is allocated in the order of received orders, such that product for an order is completed at the earliest time. In weaving and dyeing processing in the fiber industry, normally a yarn producer which receives orders from customers issues orders for weaving and dyeing processing to a plurality of weaving and dyeing plants, which are separate companies, and the above-described allocation of production space and production planning are performed at each plant. Hereupon, although only the case of dyeing is described, it goes without saying that the invention of this application can also be applied to weaving.

Furthermore, reviews of schedules for the production space that can be used as a basis for allotment of the above production space, or in other words, the production space that can be secured based on anticipated orders, are performed over comparatively long time-spans such as one to two months.

However, the above-described production space allocation method performs allocation to earlier periods even when there is allowance in the time of delivery of production for the orders that have been received earlier but have later times of delivery, so that subsequent orders with short times of delivery cannot be received, and on the whole, efficiency is not necessarily achieved. In addition, the more numerous and complicated the steps, the more difficult it is to grasp those steps for which production rates are low compared with other steps, and which, therefore, have a large impact on the production rates of the plant as a whole. Hence inefficient plans which do not take such steps into consideration are created, and it has not been possible to provide an early reply on times of delivery for received orders.

When there exist a plurality of dyeing plants for a single source of processing orders (yarns, gray yarn producers) as in the case of the above-described dyeing processings in the fiber industry, the allocation of production space separately among each of the dyeing plants, as is done conventionally, lacks flexibility with respect to production space among the dyeing plants, and adjustments directly with the customers are not possible, so that overall there are inefficient aspects with respect to the source of processing orders. Further when there are large fluctuations in orders received, as in the case of the fiber industry, if the frequency of revision of production space to be secured in advance is not quite high, the operating ratio of production space drops, and opportunities to receive orders may be lost.

## DISCLOSURE OF THE INVENTION

The invention is defined in claims 1 and 14 below. The dependent claims are directed to optional and preferred features.

Hence, a production method and system are provided, suitable for the creation of production plans for products which are manufactured in a plurality of production steps, and demand volume for which fluctuates relatively easily.

This invention is particularly suited to the cases of products which are manufactured in a plurality of production steps and for which there are strong trends in popularity, as for example when the final products are fabrics.

Furthermore, a production method and production plan creation system are provided, for products produced via a plurality of steps based an orders, which enable the improvement of productivity in the production plant, the expansion of opportunities to set times of delivery to satisfy clients, and early response to clients regarding times of delivery.

Other objects and advantages of the invention of this application will become clear through the following explanations.

The basic configuration of the production method and system is characterized in that, in order to produce and deliver the same product to one or more delivery recipients, a plurality of production step types (also called production types) with different procurement periods for production of the same product are set; the desired times of delivery and desired product production amounts of delivery recipients for a prescribed production plan period, as well as supply capacity setting amounts and product procurement periods for each of the above plurality of production step types, are set in a database; prior to the start of the production plan period, for the respective desired production product amounts, allocation is performed to those production types in the order from shorter desired times of delivery, and then with longer product procurement periods among the production types satisfying the desired times of delivery; and, in cases where a desired production product amount exceeds the supply capacity setting amount, for the other production step types satisfying the above desired time of delivery, allocation is performed to those production types with longer product procurement periods.

The basic configuration of the production method and system of another embodiment is characterized in that, in order to produce and deliver the same product to one or more delivery recipients, there are a plurality of production step types, with different procurement periods, to produce the same product; when each of the plurality of production step types is a combination of one or more production steps wherein the plurality of production steps are arranged linearly to produce the final product, for each of these one or more production step combinations, the expectation values of products produced by the combined production steps are evaluated and the request value of customers requiring the final products are evaluated; for a prescribed production plan period, the desired times of delivery and desired produced product amounts of the delivery recipients as well as supply capacity setting amounts and product procurement periods for the above respective plurality of production step types are set in a database with the expectation values and request values; the above expectation values and the above request values are compared, and the optimum step combination is selected from among the above plurality of step combinations according to a prescribed relation; and in cases where the desired product production amount exceeds the supply capacity setting amount and/or the desired time of delivery exceeds the product procurement period, a different combination of a plurality of steps which satisfies the desired product production amounts and desired times of delivery is selected.

One preferred embodiment of a production method and system has production amounts set so as to maintain the above supply capacity setting amounts at the end of the above prescribed production plan period.

In another preferred embodiment the above prescribed production plan period is taken to be a primary period; this primary period is divided into a plurality of secondary periods; and these are each regarded as production plan periods.

In another preferred embodiment, with respect to the production plan relating to the above secondary periods, the above supply capacity setting amount is set using the following equation:

supply capacity setting amount = probabilistically

estimated product demand amount + non-probabilistically

predicted product demand amount

(wherein, the probabilistically estimated product demand amount is the product demand amount calculated probabilistically as a function of the procurement period over the above primary period, and the non-probabilistically predicted product demand amount is an amount set arbitrarily without employing calculations to correspond to demand fluctuations which cannot be calculated probabilistically, and may be negative).

In this embodiment, the setting "supply capacity setting amount = probabilistically calculated product demand amount" is preferably employed for the primary period only.

In still another preferred embodiment the above supply capacity setting amount is set according to the trends of customers requiring the final products.

Another preferred embodiment is characterized in that, instead of the above, the non-probabilistically predicted product demand amount is set according to the trends of customers requiring the final products.

In another preferred embodiment the above primary period is longer than the shortest procurement period among the plurality of production step types, and that the above secondary periods are periods in which it is possible to grasp market fluctuations for the product.

In order to achieve the above object of this invention, in the creation of the production plan for products to be produced via a plurality of steps based on orders, each time an order received, production space in a prescribed step is allocated for that order such that production ends at as late a time as possible while satisfying the time of delivery, based an information on the production space available for use and set in advance; and a production plan for the order is created based an this allocation.

The basic configuration of a production method and system of another embodiment is characterized in comprising a first step in which, when creating a production plan for products to be produced via a plurality of steps based an orders, the available production space and production period are decided in advance for at least one step among the plurality of steps; a second step, in which, when an order is received, processing is performed one or more times in which an unselected step SN among the one or more steps is selected, and the production space and production period for the step SN are allocated such that the end of the step SN occurs latest within the range in which the time of delivery of the order is satisfied; and, a third step in which a production plan is created for the order, based on the allocation of production space and production periods in the second step.

A preferred embodiment of the above invention is characterized in that the above one or more steps comprise steps with smaller production rates than the immediately preceding steps among the above plurality of steps (bottleneck steps). It is more preferable that the above one or more steps comprise the step with the smallest production rate among the above plurality of steps (the greatest bottleneck step).

By this means, steps with lower production rates, and for which the securing of production space and production periods is difficult, are secured early, so that on the whole, later production periods can be selected than in the prior art; consequently earlier production periods can also be allocated to orders occurring later and having higher degrees of urgency.

Also, a separate embodiment of the above invention is characterized in that during processing to allocate the production space and production period of the above step SN, when a situation occurs such that allocation within the range satisfying the time of delivery for the above order is not possible, if, for allocation of production space and production periods for a step SN preceding the step SN for which the situation has occurred, there exists another step SN which follows the step SN for allocation according to the previous order of allocation processing and which is within a range not satisfying the time for delivery of the above order, allocation processing of production space and production periods are performed in the order opposite the order of the previous allocation processing, such that the step SN ends the earliest within the range which satisfies the production period.

A separate embodiment of the above invention is characterized in that the prescribed production plan period is taken to be the primary period, this primary period is divided into a plurality of secondary periods, and the above first step is performed for the primary period; and in having a step in which the available space and production periods decided in the above first step are updated for each of the secondary periods.

By this means, steps which have lower production rates compared with other steps and which have a large influence on the production rate for the overall plant can be considered with priority, while creating a production plan according to actual conditions.

A separate embodiment of the above invention is characterized in that the above products are fiber products.

A separate embodiment of the above invention is characterized in that, when there exist an order-receiving division which receives the above orders and a production plant which executes the above production according to instructions from the above order-receiving division, at least the above secondary step is performed by the above order-receiving division.

Other features of this invention will become clear through the aspects of the invention explained below, referring to the drawings and embodiments.

BRIEF DESCRIPTION OF THE DRAWINGS

Fig. 1 shows in entirety a production plan creation system to which a first aspect of this invention has been applied;

Fig. 2 shows the flow of operation of an embodiment of the first aspect of this invention;

Fig. 3 shows an embodiment of a plurality of production steps, in an example in which the finished products are chemical fiber fabrics that have undergone dyeing and finishing processing ;

Fig. 4 shows the entirety of a production plan creation system to which a second aspect of this invention has been applied;

Fig. 5 shows the flow of operation of an embodiment of this invention, executed in the system of Fig. 4;

Fig. 6 is an embodiment of a combination of a plurality of production steps, and is an example having steps from the manufacture of a fiber to the manufacture of a dyed and finished fabric product;

Fig. 7 shows the flow of operation of a second embodiment of this invention, executed in the system of Fig. 4;

Fig. 8 shows the configuration of an embodiment of a production plan creation system to which a third aspect of this invention is applied;

Fig. 9 shows one example of data of a production master database 210 stored in a storage device 205 of the production plan creation system 201;

Fig. 10 shows one example of data of a production master database 209 stored in the storage device 205;

Fig. 11 shows the flow of processing in the production plan creation system 201 of this embodiment;

Fig. 12 is a flowchart showing examples of the contents of decision processing for the production (processing) space and production (processing) period in a bottleneck step by the production space allocation means 208; and,

Fig. 13 explains the manner in which received-order data is reflected in the production space database 209.

BEST MODE FOR CARRYING OUT THE INVENTION

Below, aspects of this invention are explained referring to the drawings.

The following explanations refer to the drawings and tables. The embodiments illustrated through figures and drawings are to aid understanding of this invention, and do not limit the scope of protection of this invention. It goes without saying that other aspects may fall within the scope of this invention so long as they are compatible with the gist of the invention.

The meanings of terms relating to explanations of the invention, including the following descriptions, and to the claims are as follows.

In the specification of this application, "a plurality of production step types" are principally explained for the longest step and for partial step elements thereof. However, as for example in the above case of a plurality of production steps arranged in series, insofar as no particular limits are specified, in this invention there are no such limitations, and production step types comprising entirely different step elements as well as production step types for which some step elements differ are included.

"Desired time of delivery" has been used with the same meaning as "period until completion of production"; however, cases in which the period from completion of production until delivery are to be considered, and the total is used as the desired time of delivery, as well as cases in which the period from completion of production until delivery is ignored and the period until production completion is used as the desired time of delivery, fall within the scope of this invention.

The "desired product production amount of the delivery recipient" means the amount to be produced in order to satisfy the desired delivery amount of the delivery recipient. In the following explanations, for simplicity it is assumed that "desired product production amount" = "desired delivery amount of delivery recipient" (in some cases called simply "desired amount").

The supply capacity setting amount is the amount which it is thought can be supplied within a product procurement period; this can be set by a variety of methods, including setting of an arbitrary value.

For example, product amounts converted from the amounts of raw material inventory, intermediate products, intermediate inventory and similar, can be set as the supply capacity setting amount, as the amount secured to be converted into products.

In this case, when labor is necessary to determine the intermediate product, intermediate inventory or other amounts, calculations may be performed which consider only the principal intermediate products and intermediate inventory. Also, the amount of raw material inventory alone, converted into a product amount, can be set as the supply capacity setting amount, without taking intermediate products or intermediate inventory into account at all; in some cases this method is more practical.

In cases where the amount that can actually be produced within a period is emphasized, rather than considerations of raw material inventory, intermediate products, intermediate inventory and similar, the amount that can be produced within a product procurement period can be set as the supply capacity setting amount.

Also, in cases where raw material inventory, intermediate products, intermediate inventory or similar increase temporarily due to some situation, to exceed the value set as the supply capacity setting amount, it is desirable that these amounts be set as the supply capacity setting amount so long as this state persists. In this way, excessive inventory can be promptly reduced.

In the following explanation, for convenience, an example is adopted in which the amount obtained by converting only the raw material inventory into a product amount is set as the supply capacity setting amount. In light of this, below the supply capacity setting amount is called the raw material inventory setting amount.

In the following explanations, amounts are regarded as "weights," and a case is considered in which there is no change in the weight from raw materials to final products (that is, the process yield is 100%). When actually applying this invention, yields for each step must be considered; and, there may be cases in which units other than "weight" are used as amounts. In such cases, if the amounts other than weight which are used are converted into weights, and yields are corrected to obtain representations in unified amounts, the following explanation can be applied without contradictions.

For example, if there are 100 tons of raw materials and the product yield is 80%, then this 100 tons, when converted into a product amount, becomes 80 tons; when the desired delivery amount of a delivery recipient is 10,000 meters of 1 meter wide cloth, and the basis fabric weight is 300 $g/m^2$, then the conversion 10,000x100x300/1,000,000 tons can be performed.

To begin with, a first aspect of the invention is explained.

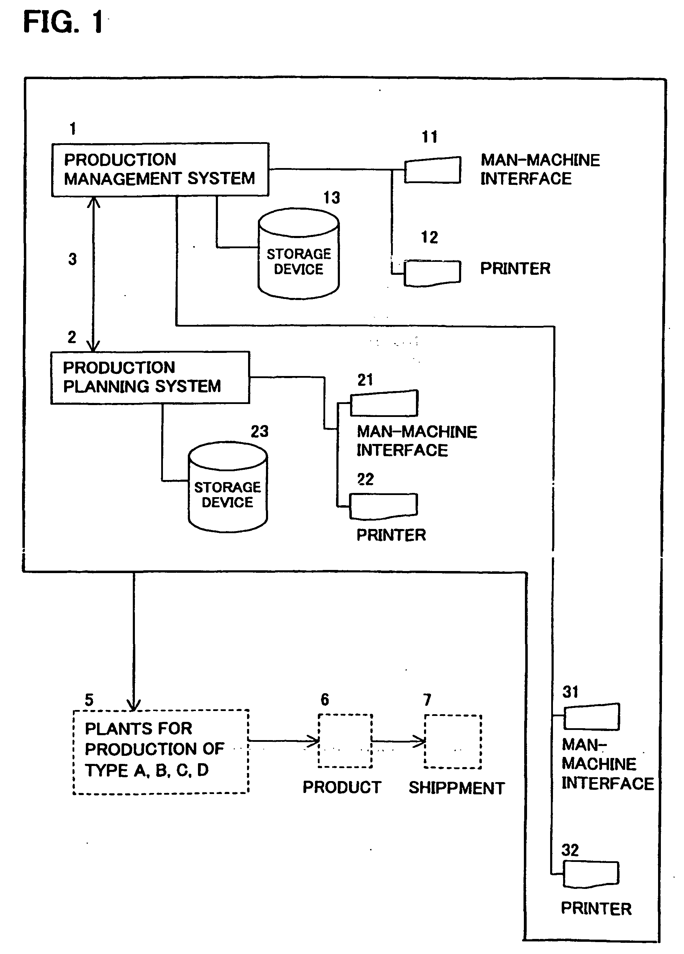

Fig. 1 shows in entirety a production plan creation system to which a first aspect of this invention has been applied. In this drawing, there are a production management system 1, comprising one or more computers or the like, in turn comprising a computation device, data storage device to store databases, and similar, as well as a production plan creation system 2, comprising one or more computers or the like, in turn comprising a computation device, data storage device to store databases, and similar.

The production management system 1 and production plan creation system 2 are connected by data transfer means 3 such as a communication circuit, floppy disks, or minidiscs.

Based on a production plan created by means of this invention, production at one or more plants is executed (5 in the drawing). And, the products 6 which are produced are shipped (7).

Product warehouses may be provided to hold products temporarily until shipment 7. Warehouses to temporarily hold as inventory the starting raw materials for the plurality of production types A, B, C, D are not shown in the drawing. The existence of such warehouses themselves is not directly related to this invention.

Instead of a predetermined area such as a warehouse, raw materials may also be stacked up in a corner of a production site. It is self-evident that the existence of raw material and product warehouses is not a necessary condition for this invention. The essential point is that the inventory amounts of raw materials and products can be grasped accurately. Whether a warehouse is necessary for this is not directly related to the action of this invention.

The above production management system 1 and production plan creation system 2 are connected to man-machine interfaces 11, 21, 31 and to printers or other output devices 12, 22, 32, as well as to storage devices 13, 23.

Here, the man-machine interface 31 and output device 32 are principally an input device and printer for information relating to products and raw materials, placed in an area close to the products or in an area close to the raw materials; these can be replaced however by the man-machine interface 11 and output device 12 respectively. Also a plurality of man-machine interfaces 31 and output devices 32 can be provided.

By means of the production management system 1 and production plan creation system 2 as well as the components connected thereto, not only is a production plan created which selects optimal steps for the entire period of the production plan, but a production plan can also be created which specifies the raw materials, equipment, product inspection plans, packing plans that are used, and deployment of personnel engaged in production to be used, and various types of management and control can be performed which accompanies product production, such as equipment operation management, production record management, and quality control. Addition of this processing does not in the least impede the action of this invention.

In this case, it is preferable that the production plan creation system 2 be primarily involved in the former production plan, and that the production management system 1 execute the various management and control accompanying the latter production.

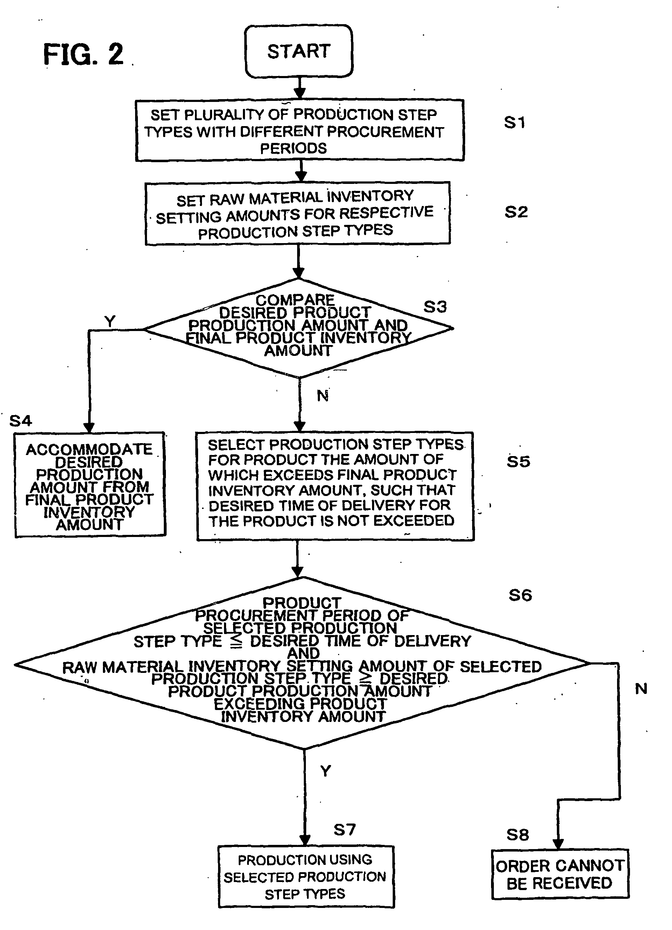

Fig. 2 shows the flow of operation of an embodiment of this invention. This operation flow is primarily executed and controlled in the production plan creation system of Fig. 1.

When processing is started, a plurality of production steps with different procurement periods are set (processing step S1). Here an embodiment is used to explain the plurality of production steps.

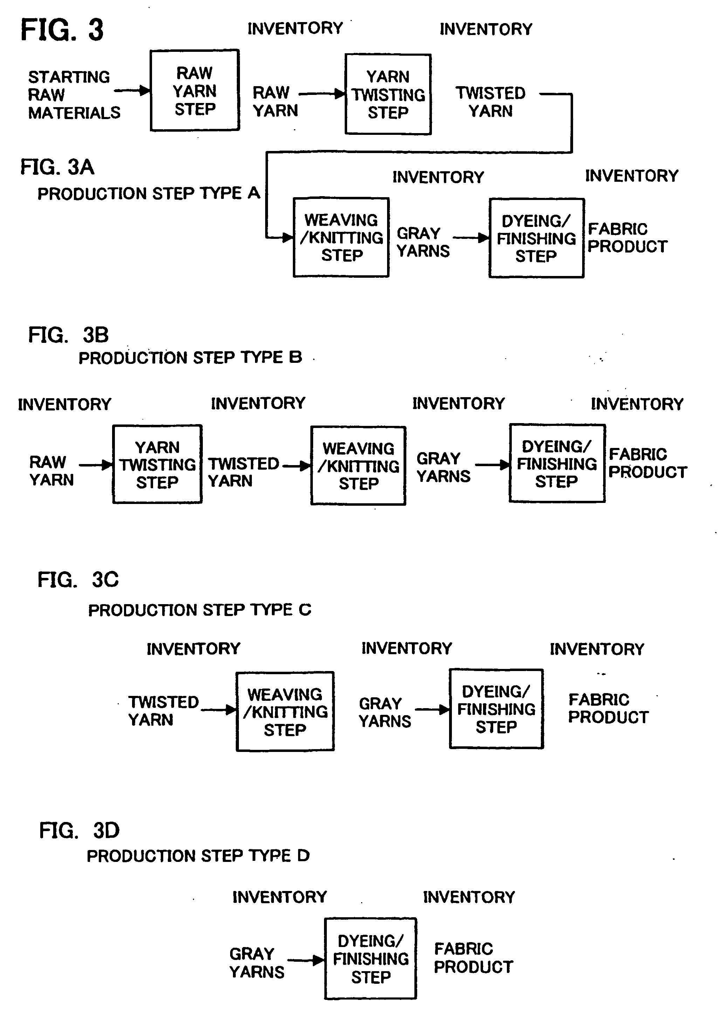

Fig. 3 shows an embodiment of a plurality of production steps, in an example having steps from the manufacture of yarns to the manufacture of dyed chemical fiber fabric products.

Fig. 3A shows steps from the yarn step to produce a yarn from starting raw materials, to a twisting step for yarn twisting using the yarn as the starting material, a weaving/knitting step for weaving/knitting of the twisted yarn, and a dyeing and finishing step to dye the gray yarn obtained in the weaving/knitting step.

Here, a yarn is, with respect to form and performance, positioned in the stage preceding fabric, and is a bundle of long fibers prepared by aligning or collecting fibers, as stated in the *Sen'i Benran--Kakou Hen* edited by the Society of Fiber Science and Technology, Japan, and published by Maruzen; raw yarns can be broadly divided into filament yarns consisting of long fibers, and spun yarns consisting of comparatively short fibers.

Filament yarns are divided into monofilament yarns and multifilament yarns; spun yarns can also be divided into long and short varieties depending on the fiber length. Here, however, steps capable of the manufacture of all these raw yarns shall be referred to as raw yarn steps.

Production steps include all steps from these raw yarn steps through to dyeing/finishing steps. These are defined as production step type A.

Fig. 3B shows steps for production from a raw yarn to a fabric product. This is called production step type B. Using a raw yarn as the raw material, a plurality of yarn twisting forms are employed to produce different types of twisted yarns. Through these yarn twisting forms, the texture and feel of the final fabric product is determined. Hence the raw yarn which is the raw material of the yarn twisting step can be used in yarn twisting steps with various yarn twisting forms; but a twisted yarn obtained by a specific yarn twisting form of the yarn twisting step has a limited scope of use in subsequent production steps.

That is, the weaving/knitting step follows as the next production step; but the texture and feel of a fabric which is the final product are decisively determined by the form of the weaving or knitting in this weaving/knitting step. Consequently the types of twisted yarn used as raw materials in this weaving/knitting step are also limited.

Similarly, the dyeing/finishing step follows as the next production step; and the texture and feel of a fabric which is the final product are determined still more decisively by the dye type, pattern and similar in this dyeing/finishing step. Hence the types of gray yarn used as the raw materials in this dyeing/finishing step are also limited.

In the production step type B, the raw materials are raw yarns, and after passing through a yarn twisting step, weaving/knitting step and dyeing/finishing step, the fabric product is obtained. Hence in production step type B, the production step period from raw materials until the final fabric product is obtained, that is, the time of delivery, is longer; but because the starting raw material is a raw yarn, the inventory-related risks with respect to demand predictions are small.

Production step type C in Fig. 3C is defined as weaving/knitting and subsequent steps which take, as the starting raw material, the twisted yarn obtained by the yarn twisting step of production step type B in Fig. 3B. In this production step type C, compared with production step type A in Fig. 3A and production step type B in Fig. 3B, the production step until the fabric product is shorter, and so the procurement period is shorter. However, if the twisted yarn inventory as raw materials increases, the twisted yarn used in the weaving/knitting step has limitations owing to the weaving/knitting forms, and in addition the storage period is limited as is characteristic of twisted yarns, so that it is difficult to increase the twisted yarn inventory beyond the raw material inventory setting amount.

Fig. 3D defines, as production step type D, steps which use as starting raw materials the gray yarn obtained by the weaving/knitting step. In this production step type D, compared with the above production step types A, B and C, the production steps until the fabric product consist only of the dyeing/finishing step, and so the time of delivery is the shortest. However, if the inventory of the gray yarn which is the starting materials increases, the gray yarn used in the dyeing/finishing step has limitations owing to the dyeing patterns, so that it is difficult to increase the gray yarn inventory beyond the raw material inventory setting amount.

As can be understood from the explanation of Fig. 3, the relations of production step types to time of delivery and inventory amount are important. This invention relates to a method and system enabling creation of production plans such that these relations can be selected appropriately, enabling accommodation of customer requests.

Returning to Fig. 2, as explained in Fig. 3, a plurality of production types with different procurement periods are set for the final products (processing step S1). In the example of Fig. 3, four production step types are set.

Raw material inventory setting amounts are set for each of these plurality of production step types (processing step S2).

Table 1 is an example of the setting of a plurality of production step types with different procurement periods, which can produce the same product (processing step S1), and the setting of raw material inventory setting amounts required by each of the production step types (processing step S2). This setting information is stored in the storage device 13 of Fig. 1.

Table 1

| Production step type | Product procurement period | Raw material inventory setting amount |
|---|---|---|
| Type A | 60 days | 15 tons |
| Type B | 45 days | 10 tons |
| Type C | 30 days | 7 tons |
| Type D | 10 days | 5 tons |

In the above Table 1, production step type A is a production step type comprising steps to manufacture a raw yarn from initial raw materials, and corresponds to Fig. 3A. The raw material inventory setting amount for raw materials to manufacture the raw yarn is 15 tons, and the procurement period from this raw material to the finished product is 60 days.

Production step type B corresponds to Fig. 3B, and employs the raw yarn manufactured in the raw yarn step of production step type A as the raw material, the raw material inventory setting amount of which is set to 10 tons. The raw yarn step of the production step type A can be omitted, so that at this stage, the procurement period is shortened to 45 days.

Production step type C corresponds to Fig. 3C, and employs the twisted yarn manufactured in the yarn twisting step of production step type B as the raw material, the raw material inventory setting amount of which is set to 7 tons. The raw yarn and yarn twisting steps of the production step types A and B can be omitted, so that at this stage, the procurement period is shortened to 30 days.

And, production step type D corresponds to Fig. 3D, employing the gray yarn manufactured in the weaving/knitting step of production step type C as the raw material, the raw material inventory setting amount of which is set to 5 tons. The raw yarn, yarn twisting, and weaving/knitting steps of production step types A, B, C can be omitted, so that at this stage, the procurement period is shortened to 10 days.

Table 2 shows the details of the requests P1 to P5 of a plurality of customers regarding a product P, indicating the desired times of delivery and the desired product amounts.

Table 2

| Request number | Desired time of delivery and desired product production amount |
|---|---|
| P1 | 4 tons after 10 days |
| P2 | 8 tons after 50 days |
| P3 | 7 tons after 30 days |
| P4 | 15 tons after 60 days |
| P5 | 3 tons after 10 days |

The contents of Table 2 are input by the person in charge to the production management system 1 of Fig. 1, and are used by the production plan creation system 2. The respective desired times of delivery and desired amounts are shown corresponding to the request numbers P1 to P5 for customer demand. For the request number P1, the desired time of delivery is after 10 days and the desired amount is 4 tons.

Similarly, for request number P2, a desired time of delivery of 50 days after and a desired amount of 8 tons are shown; for request number P3, the desired time of delivery is 30 days after and the desired amount is 7 tons; for request number P4, the desired time of delivery is 60 days after and the desired amount is 15 tons; and for request number P5, the desired time of delivery is 10 days after, and the desired amount is 3 tons.

Hence this invention has the feature that, in the production plan creation system, which request numbers for customer demand are allocated to what production step types in order to satisfy desired times of delivery and desired amounts for the plurality of customer requests in question.

As the method to achieve this, in the flow shown in Fig. 2, the desired product production amounts and final product inventory amounts are compared (processing step S3). If the desired product production amounts can be provided by the final product inventory amounts, the desired amounts are accommodated using the inventory amounts (processing step S4).

In the comparison of the desired product production amount and final product inventory amount, if the desired product production amount exceeds the final product inventory amount, execution proceeds to a step in which a production step type is selected which has a product procurement period not exceeding the desired time of delivery of products for which the inventory amount is exceeded (processing step S5).

In cases where such a selection is not possible and/or in cases where the desired product production amount exceeding the product inventory amount cannot be provided from the raw material inventory setting amount for the selected production step type (in processing step S6, when "procurement period of selected production step type" > "desired time of delivery" and/or when "raw material inventory setting amount of selected production step type" < "desired product production amount exceeding product inventory amount"), orders cannot be received (processing step S8).

In cases where orders cannot be received, after contacting the customer and discussing the matter, a different time of delivery is negotiated, or other actions are taken.

In processing step S6, in cases where "procurement period of selected production step type" ≤ "desired time of delivery" and moreover "raw material inventory setting amount of selected production step type" ≥ "desired product production amount exceeding product inventory amount" are satisfied, the production plan is executed for the selected production step type (processing step S7).

Table 3 is an example of a production plan which is created based on the processing flow of Fig. 2 in accordance with this invention, and corresponding to Tables 1 and 2, and is a table indicating the results of allocation to each production step type and replenishment amounts. The inventory amount of the final product P is 2 tons.

Table 3

| Production step type | Result of allocation to production type | Desired product production amount | Raw material inventory setting replenishment amount |
|---|---|---|---|
| A | P4 | 15 tons | 15 tons |
| B | P2 | 8 tons | 10 tons |
| C | P3 | 7 tons | 7 tons |
| D | P1, P5 | tons | 7 tons |

In other words, the desired times of delivery are given priority, and demand is accommodated from final product inventory amounts, supplemented insofar as possible with final product inventory amounts in a plurality of production steps (see processing steps S3, S4 in Fig. 2). In cases where there is a need to leave final product inventory amount for policy reasons, this stage can of course be skipped.

In the example of Table 2, if the order from shorter desired times of delivery is considered, then the request numbers for which the desired times of delivery are shortest are P1 and P5. The desired product production amounts for the request numbers P1 and P5 total 7 tons. On the other hand, as stated above, the inventory amount of the final product P is 2 tons, and so this is allocated first (processing step S4). The desired time of delivery for the remaining 5 tons of production is 10 days; hence the production step type D, which is the only production type the product procurement period of which satisfies this desired time of delivery, is allocated.

Hence when creating a production plan, the desired product production amount is 5 tons, obtained by subtracting what can be allotted from the final product inventory amount. On the other hand, the raw material inventory setting replenishment amount is 7 tons, including the product amount of 2 tons (see Table 3). If replenishment of the product amount of 2 tons is not necessary, the raw material inventory setting replenishment amount may be set to 5 tons.

In this way, by selection of the production step type D (processing step S5), the desired time of delivery can be satisfied (processing step S6), and production can be executed from the selected production step type D for the request numbers P1 and P5 (processing step S7).

Next, proceeding in order from the shortest desired times of delivery, for request number P3, the desired time of delivery is 30 days and the desired amount is 7 tons; hence among the production step types D and C, which are production step types the product procurement periods of which satisfy the desired time of delivery, production step type C, which is the production step type with the longer product procurement period, is allocated (processing step S5). At the same time, replenishment of 7 tons is performed in order to secure a raw material inventory setting amount of 7 tons.

Similarly, request number P2 has a desired time of delivery of 50 days and desired amount of 8 tons, and so production step type B is allocated (processing step S5). At this time, the 8 tons used is replenished in order to secure the raw material inventory setting amount of 10 tons.

Also, request number P4 has a desired time of delivery of 60 days and desired amount of 15 tons, and so production step type A, having the longest procurement period, is allocated (processing step S5). At the same time, replenishment of 15 tons is performed to secure the raw material inventory setting amount of 15 tons.

In this way, a production step type allocation plan is obtained, and manufacturing is performed at the plants corresponding to this (see Fig. 1, plants 5).

Suppose the inventory for production step type D is 12 tons due to order cancellations by customers or other reasons, as compared with the raw material inventory setting amount of 5 tons set for production step type D. This corresponds to the case where the raw material inventory, intermediate products, intermediate inventory and similar are increased temporarily due to the situation as described above, and the amount set as the supply capacity setting amount is exceeded. These amounts are set as the supply capacity setting amounts so long as this state continues.

In other words, even if request number P3 is allocated to production step type D, "procurement period for selected production step type" ≤ "desired time of delivery", and "production amount which can be produced from raw material inventory amount for selected production step type" ≥ "desired product production amount exceeding product inventory amount" hold, so no problems are encountered.

Allocation results for this case appear in Table 4.

Table 4

| Production type | Result of allocation to production type | Desired product production amount | Raw material inventory setting replenishment amount |
|---|---|---|---|
| A | P4 | 15 tons | 15 tons |
| B | P2 | 8 tons | 8 tons |
| C | | 0 | 0 |
| D | P1, P5, P3 | 12 tons | 7 tons |

In the example of the above Tables 1 through 3, production step types are determined for customer requests for one product type. On the other hand, in general a plurality of customer requests will appear for a plurality of products.

An embodiment of this invention for such a state of affairs is explained below.

Table 5 shows an example of the settings of a plurality of production step types A through D with different procurement periods, and which can produce the same product as in Table 1, for each of the products Q, R, as well as the raw material inventory setting amounts necessary for each production step type.

Table 5

| Product name | Production step type | Product procurement period | Raw material inventory setting amount |
|---|---|---|---|
| Q | A | 60 days | 7 tons |
| | B | 45 days | 10 tons |
| | C | 30 days | 15 tons |
| | D | 10 days | 5 tons |
| R | A | 60 days | 20 tons |
| | B | 45 days | 20 tons |
| | C | 30 days | 20 tons |
| | D | 10 days | 20 tons |

The procurement periods for production step types A through D for each of products Q and R are similar to the procurement periods of Table 1. For product Q, the raw material inventory setting amounts for production step types A through D are set to 7, 10, 15, and 5 tons, respectively.

On the other hand, for product R, the raw material inventory setting amounts for production step types A through D are all set to 20 tons.

Table 6 is an example showing the breakdown of desired production for the production step types A through D of Table 5.

Table 6

| Breakdown of desired production | | Primary period | | | |
|---|---|---|---|---|---|
| Product name | Production request number | First secondary period | Second secondary period | Third secondary period | Fourth secondary period |
| Q | Q1 | 3 tons after 10 days | | | |
| | Q2 | 2 tons after 30 days | | | |
| | Q3 | | 2 tons after 30 days | | |
| | Q4 | | | 3 tons after 10 days | |
| | Q5 | | 5 tons after 45 days | | |
| | Q6 | | | | 5 tons after 60 days |
| | Q7 | 3 tons after 60 days | | | |
| | Q8 | 3 tons after 30 days | | | |
| | Q9 | | 3 tons after 30 days | | |
| R | R1 | 1 ton after 10 days | | | |
| | R2 | 5 tons after 60 days | | | |

Here the concepts of primary periods and secondary periods are employed.

The primary period can be decided arbitrarily. When the period is shorter than the shortest product procurement period, the significance of production step allocation is diminished, and so it is preferable that a longer period be used. For example, a production period of one month may be used. On the other hand, the secondary period is obtained by arbitrarily dividing the primary period into a plurality of periods, and may for example be defined as represented in the one-week unit. When there are a plurality of products, as for example in the case of products Q and R, it is desirable that the same primary period and secondary periods be used for all products, so that production management is unified throughout.

It is preferable that the secondary periods be periods in which market fluctuations for the products can be grasped. This is because if the secondary periods are periods in which market fluctuations for the products can be grasped, it becomes easy to create production plans which reflect market fluctuations.

The desired number of days of production (desired times of delivery) and desired amounts (desired product production amounts) in Table 6 are numerical values immediately before the start of each secondary period.

In Table 6, desired times of delivery and desired product production amounts are entered for other secondary periods also because there are cases in which, judging from past records, reliable orders are expected even when there are no actual orders from customers. This application can be applied to such cases as well.

Combinations of primary periods and secondary periods are not limited to months/weeks, but may also be, for example, years/months, years/weeks, half-years/months, half-years/weeks, quarter-years/months, quarter-years/weeks, months/ten-day periods, ten-day periods/days, months/days, weeks/days, and so on.

As methods for setting the above-described raw material inventory setting amounts, (1) a method of empirically setting the value based on past demand records, (2) a method of empirically setting the value based on past demand records and predictions of future demand, and (3) a method of setting the value probabilistically through statistical

**EP 1 310 845 B1**

processing of past demand records, may be used.

On investigating demand fluctuations for each secondary period over the last two-year period for the products Q, R, the results of Table 7 were obtained. Here an example in which one-week periods are used as secondary periods is explained.

Table 7

| Product | Demand record per week over the last two-year period | |
|---|---|---|
| | Mean value | Standard deviation |
| Q | 0.95 tons | 2.26 tons |
| R | 3.8 tons | 3.2 tons |

However, currently demand for product R is expanding rapidly, and values take into consideration this prediction of growth. Of the plurality of production step types, the following equation was used to set the raw material inventory setting amount for production step type i.

(raw material inventory setting amount for production

step type i) = $a_i$((product demand mean value) + $K_i$ * (product

demand standard deviation) * $f_i$(raw material procurement period for production step type i))

In order to make the most of the characteristics of product Q, for which comparatively stable growth is anticipated, and product R, for which strong future growth is anticipated and shortages of which must be avoided, values of $K_i$ were set and used as shown in the following Table 8.

Table 8

| Production type | Product Q | Product R |
|---|---|---|
| A | 30.0 | 8.0 |
| B | 14.0 | 7.0 |
| C | 11.0 | 4.8 |
| D | 1.9 | 4.0 |

$a_1$ is a coefficient used to add the rate of contribution for each production step type to produce the same product; the values shown in Table 9 below were set and used.

Table 9

| Production type | Product Q | Product R |
|---|---|---|
| A | 0.1 | 0.25 |
| B | 0.2 | 0.25 |
| C | 0.3 | 0.25 |
| D | 0.4 | 0.25 |

In the above equation, $f_i$ (the raw material procurement period for production step type i) is a function employed to take into consideration, in the raw material inventory setting amount, the period from the occurrence of an order to delivery for the raw materials of production step type i. For example, as shown in *Zaiko Kanri no Jissai* by Hideo Yoshikawa, published by JUSE Press, $f_i$(raw material procurement period for production step type i) = (raw material procurement period for production step type i)$^{0.5}$ can be used. Or, other values may be set arbitrarily.

Values used in this embodiment of the invention are shown in Table 10 below. There are already substantial production records for product Q, and demand is stable, so that (raw material procurement period for production step

12

type i)$^{0.5}$ was used.

When the above is applied to product Q and production step type A, then $a_i=0.1$, the mean demand for the product = 0.95, $K_i=30.0$, the demand standard deviation for the product = 2.26, and $f_i=1.0$; hence (raw material inventory setting amount for production step type i) = 0.1\*(0.95 + 30.0\*2.26\*1.0) = 6.875. The value of 7 tons was determined based on the result.

On the other hand, demand for product R is currently expanding rapidly, so the settings of Table 10 below were used.

Table 10

| Production type | Product Q | Product R |
|---|---|---|
| A | 1.0 | 3.0 |
| B | 1.5 | 3.5 |
| C | 2.0 | 5.0 |
| D | 2.7 | 6.0 |

In this way, for demand fluctuations which can be predicted probabilistically, the raw material inventory setting amount can be set to accommodate demand fluctuations likely to occur in future based on past records of demand fluctuations, and taking into account past experience and predictions of future demand.

In order not to hold excess inventory, it is preferable that raw material inventory setting amounts be reviewed carefully and meticulously, and that each time the values of $a_i$, $K_i$, and $f_i$ be set carefully.

If the production plan of this method becomes established and it becomes possible to statistically calculate the demand means and demand standard deviations for each product by production type, instead of the values of Table 7, the demand means and demand standard deviations by production type can be used. In this case it is reasonable to set $a_i=1$.

Or, a method can be used in which the raw material inventory setting amount is initially set in advance to a value estimated from past experience, and by subsequently updating the setting carefully each time a fluctuation occurs, causing convergence on a desirable raw material inventory setting amount.

In this way, the probabilistic product demand (probabilistically estimated product demand amount) is calculated, and taking supply capacity setting amount = probabilistically estimated product demand, the raw material inventory setting amount is set, as an effective method for setting the supply capacity setting amount in an objective manner.

It is preferable that this setting method be applied only to primary periods, and that for secondary periods, taking supply capacity setting amount = probabilistically estimated product demand + non-probabilistically predicted product demand amount, the raw material inventory setting amount be set, in order to more rapidly and reliably cope with fluctuation demands, and for closer compatibility with the objective of reviewing production plans when preparing secondary periods.

Here the probabilistically estimated product demand is the product demand amount, estimated probabilistically as a function of the procurement period over the above primary period; the non-probabilistically predicted product demand amount is an amount set arbitrarily, without relying on estimates, for demand fluctuations which cannot be estimated probabilistically; negative values are also possible. In other words, the non-probabilistically predicted product demand amount is an amount which considers demand fluctuations which cannot be covered by probabilistic estimates of product demand, such as for example demand fluctuations that are for outside of the past trends, and which is input in order to more reliably set the supply capacity setting amount.

In the above Table 6, the desired product production amounts prior to the beginning of the first secondary period are indicated. For product Q there are production request numbers Q1 to Q9; for product R there are production request numbers R1 and R2. Desired product production amounts are set for each based on the first through fourth secondary periods during the primary period.

For example, the request number Q1 for product Q is, in the first secondary period, 3 tons after 10 days; request number Q3 in the second secondary period is 2 tons after 30 days.

Table 11 lists product inventory amounts prior to the beginning of the primary period and the first secondary period, obtained from the computation device of the production plan creation system 2 referring to Tables 5 and 6, as well as the results of allocation to production types and replenishment amounts for products Q and R.

Inventory amounts for the final products Q and R are assumed to be 2 tons and 0 tons, respectively.

Table 11

| Product name | Allocation to production types | | Primary period | | | |
|---|---|---|---|---|---|---|
| | | | First secondary period | Second secondary period | Third secondary period | Fourth secondary period |
| Q | A | Allocation | Q7 | | | Q6 |
| | | Raw material inventory setting replenishment amount | 3 tons | | | 5 tons |
| | B | Allocation | | Q5 | | |
| | | Raw material inventory setting replenishment amount | | 5 tons | | |
| | C | Allocation | Q2, Q8 | Q3, Q9 | | |
| | | Raw material inventory setting replenishment amount | 5 tons | 5 tons | | |
| | D | Allocation | Q1 | | Q4 | |
| | | Raw material inventory setting replenishment amount | 1 tons | | 3 tons | |

Table 11 (continued)

| Product name | Allocation to production types | | Primary period | | | |
|---|---|---|---|---|---|---|
| | | | First secondary period | Second secondary period | Third secondary period | Fourth secondary period |
| R | A | Allocation | R2 | | | |
| | | Raw material inventory setting replenishment amount | 5 tons | | | |
| | B | Allocation | | | | |
| | | Raw material inventory setting replenishment amount | | | | |
| | C | Allocation | | | | |
| | | Raw material inventory setting replenishment amount | | | | |
| | D | Allocation | R1 | | | |
| | | Raw material inventory setting replenishment amount | 1 ton | | | |

In the above Table 11, the first secondary period is considered. For product Q, the request number with the shortest time of delivery is Q1, with a desired amount of 3 tons and time of delivery of 10 days after. Two tons of completed product is allocated to this 3 tons of desired product. As a result the amount to be produced anew by production step type D is 1 ton, and a replenishment amount of 1 ton is prepared for this purpose.

The request numbers Q2 and Q8 have times of delivery of 30 days after and a total desired amount of 5 tons. Hence production by production step type C is set, and the replenishment amount to accommodate the production amount is set to 5 tons.

The request number Q7 has a time of delivery of 60 days after and desired amount of 3 tons. Hence it is set to be produced by production step type A, and the replenishment amount to accommodate the production amount is set to 3 tons.

Similarly with respect to product R, in the first secondary period, request number R1 has a desired time of delivery of 10 days after and desired amount of 1 ton. Hence a replenishment amount of 1 ton is prepared for this desired amount of 1 ton.

The request number R2 has a time of delivery of 60 days after and desired amount of 5 tons. Hence it is set to be produced by production step type A, and the replenishment amount to accommodate the production amount is set to 5 tons.

Production steps and replenishment amounts are similarly set for the second, third, and fourth secondary periods in Table 11.

Given these settings, after the first secondary period has elapsed, and before the start of the second secondary period, desired product production amounts from customers are as shown in the following Table 12. As can be understood by comparison with Table 11, for product Q, the desired amount has been corrected to increase by 2 tons for request number Q5, and in addition new request numbers Q10 to Q13 have been added.

Table 12

| Product name | Production request number | First secondary period | Second secondary period | Third secondary period | Fourth secondary period |
|---|---|---|---|---|---|
| Q | Q1 | 3 tons after 10 days | | | |
| | Q2 | 2 tons after 30 days | | | |
| | Q3 | | 2 tons after 30 days | | |
| | Q4 | | | 3 tons after 10 days | |
| | Q5 | | 7 tons after 45 days | | |
| | Q6 | | | | 5 tons after 60 days |
| | Q7 | 3 tons after 60 days | | | |
| | Q8 | 3 tons after 30 days | | | |
| | Q9 | | 3 tons after 30 days | | |
| | Q10 | | 1 ton after 10 days | | |
| | Q11 | | 3 tons after 45 days | | |
| | Q12 | | 2 tons after 30 days | | |
| | Q13 | | | 3 tons after 30 days | |
| R | R1 | 1 ton after 10 days | | | |
| | R2 | 5 tons after 60 days | | | |
| | R3 | | 10 tons after 10 days | | |
| | R4 | | 1 ton after 10 days | | |
| | R5 | | 2 tons after 30 days | | |
| | R6 | | | 3 tons after 10 days | |
| | R7 | | | 6 tons after 10 days | |

For product R, the new request numbers R3 to R7 are added.

Table 13 shows product inventory amounts before the start of the second secondary period, and the results of allocation and replenishment amount setting to each production type for products Q and R. It is assumed that inventory amounts for products Q and R are both 0 tons.

Table 13

| Product name | Allocation to production types | | Primary period | | | |
|---|---|---|---|---|---|---|
| | | | First secondary period | Second secondary period | Third secondary period | Fourth secondary period |
| Q | A | Allocation | Q7 | | | Q6 |
| | | Raw material inventory setting replenishment amount | 3 tons | | | 5 tons |
| | B | Allocation | | Q5, Q11 | | |
| | | Raw material inventory setting replenishment amount | | 10 tons | | |
| | C | Allocation | Q2, Q8 | Q3, Q9, Q12 | Q13 | |
| | | Raw material inventory setting replenishment amount | 5 tons | 7 tons | 3 tons | |
| | D | Allocation | Q1 | Q10 | Q4 | |
| | | Raw material inventory setting replenishment amount | 1 ton | 1 ton | 3 tons | |

Table 13   (continued)

| Product name | Allocation to production types | | Primary period | | | |
|---|---|---|---|---|---|---|
| | | | First secondary period | Second secondary period | Third secondary period | Fourth secondary period |
| R | A | Allocation | R2 | | | |
| | | Raw material inventory setting replenishment amount | 5 tons | | | |
| | B | Allocation | | | | |
| | | Raw material inventory setting replenishment amount | | | | |
| | C | Allocation | | R5 | | |
| | | Raw material inventory setting replenishment amount | | 2 tons | | |
| | D | Allocation | R1 | R3, R4 | R6, R7 | |
| | | Raw material inventory setting replenishment amount | 1 ton | 11 tons | 9 tons | |

In the second secondary period of Table 13, for the product Q, the request number Q10 has the shortest desired time of delivery, and the desired amount is 1 ton. Hence the production step type D is allocated, with the replenishment amount set to 1 ton.

Request numbers Q3, Q9 and Q12 have desired times of delivery of 30 days after, and the total desired amount is 7 tons. Hence the production step type C is allocated, securing a replenishment amount of 7 tons.

Request numbers Q5 and Q11 have a desired time of delivery of 45 days after, with a total desired amount of 10 tons. Hence the production step type B is allocated, and a replenishment amount of 10 tons is prepared.

For product R, in Table 12, request numbers R3 and R4 have a desired time of delivery of 10 days after, and a total desired amount of 11 tons. Hence as shown in the above Table 13, production step type D is allocated, with the replenishment amount set to 11 tons. Similar processing is performed for the third and subsequent short production plan periods.

Table 14 shows the desired product production amounts before the start of the third secondary period.

Table 14

| Product name | Production Request number | First secondary period | Second secondary period | Third secondary period | Fourth secondary period |
|---|---|---|---|---|---|
| Q | Q1 | 3 tons after 10 days | | | |
| | Q2 | 2 tons after 30 days | | | |
| | Q3 | | 2 tons after 30 days | | |
| | Q4 | | | 3 tons after 10 days | |
| | Q5 | | 7 tons after 45 days | | |
| | Q6 | | | | 5 tons after 60 days |
| | Q7 | 3 tons after 60 days | | | |
| | Q8 | 3 tons after 30 days | | | |
| | Q9 | | 3 tons after 30 days | | |
| | Q10 | | 1 ton after 10 days | | |
| | Q11 | | 3 tons after 45 days | | |
| | Q12 | | 2 tons after 30 days | | |
| | Q13 | | | 3 tons after 30 days | |
| | Q14 | | | | 15 tons after 10 days |

Table 14 (continued)

| Product name | Production Request number | First secondary period | Second secondary period | Third secondary period | Fourth secondary period |
|---|---|---|---|---|---|
| R | R1 | 1 ton after 10 days | | | |
| | R2 | 5 tons after 60 days | | | |
| | R3 | | 9 tons after 10 days | | |
| | R4 | | 1 ton after 10 days | | |
| | R5 | | 2 tons after 30 days | | |
| | R6 | | | 3 tons after 10 days | |
| | R7 | | | 6 tons after 10 days | |
| | R8 | | | 1 ton after 30 days | |

As can be understood through comparison with Table 12, for the product Q, request number Q14 is a newly added request which is so large that probabilistic prediction is not possible. That is, the figures of 15 tons in 10 days greatly exceed the raw material inventory setting amount of 5 tons for the 10-day procurement period of production type D in Table 5.

With respect to product R, 1 ton of the request number R3 was canceled, reducing the total to 9 tons, and a request number R8 was newly added.

The following Table 15 shows product inventory amounts before the beginning of the third secondary period, and the results of allocation and replenishment amount setting to each production type for the products Q and R. The inventory amount for product Q is 0 tons; as for product R, because request number R3 was modified, an inventory amount of 1 ton is assumed.

In Table 15, 1) means the replenishment amount up to the fourth secondary period. Because Table 15 is applied to the period prior to the beginning of the third secondary period, this replenishment can be performed from the third secondary period.

Also, 2) satisfies the relations "procurement period of selected production step type" ≤ "desired time of delivery" and in addition "product amount which can be produced from raw material inventory amount for selected production step type" ≥ "desired product amount exceeding product inventory amount", so that excess product inventory is applied.

Table 15

| Product name | Allocation to production type | | Primary period | | | |
|---|---|---|---|---|---|---|
| | | | First secondary period | Second secondary period | Third secondary period | Fourth secondary period |
| Q | A | Allocation | Q7 | | | Q6 |
| | | Raw material inventory setting replenishment amount | 3 tons | | | 5 tons |
| | B | Allocation | | Q5, Q11 | | |
| | | Raw material inventory setting replenishment amount | | 10 tons | | |
| | C | Allocation | Q2, Q8 | Q3, Q9, Q12 | Q13 | |
| | | Raw material inventory setting replenishment amount | 5 tons | 7 tons | 3 tons | |
| | D | Allocation | Q1 | Q10 | Q4 | Q14 |
| | | Raw material inventory setting replenishment amount | 1 ton | 1 ton | 3 tons | 15 tons 1) |

Table 15   (continued)

| Product name | Allocation to production type | | Primary period | | | |
|---|---|---|---|---|---|---|
| | | | First secondary period | Second secondary period | Third secondary period | Fourth secondary period |
| R | A | Allocation | R2 | | | |
| | | Raw material inventory setting replenishment amount | 5 tons | | | |
| | B | Allocation | | | | |
| | | Raw material inventory setting replenishment amount | | | | |
| | C | Allocation | | R5 | | |
| | | Raw material inventory setting replenishment amount | | 2 tons | | |
| | D | Allocation | R1 | R3, R4 | R6, R7, R8 2) | |
| | | Raw material inventory setting replenishment amount | 1 ton | 11 tons | 9 tons | |

As above, by providing secondary periods, market fluctuations can be accurately captured. By this means, desired amounts can be updated for every secondary period, and production plans can be corrected.

Here, as an embodiment, the settings for a primary period are considered. For the products P, R, Q, the production step type D with the shortest procurement period is considered to have a procurement period of 10 days, and the primary period is set to 28 days.

That is, the primary period is set to be longer than the shortest procurement period.

Then, a time-series analysis of past demand records is performed, and the distribution of periods from one demand occurrence to the next demand occurrence is investigated. This period distribution is statistically processed, and secondary periods are set.

Table 16 shows a portion of demand records for products P, Q, R from the 1st to the 16th of a particular month (figures in the table are in tons units).

Table 16

| Day of month | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Day of week | Tue. | Wed. | Thu. | Fri. | Sat. | Sun. | Mon. | Tue. | Wed. | Thu. | Fri. | Sat. | Sun. | Mon. | Tue. | Wed. |
| P | 2 | | | 3 | | | | 2 | | 2 | | | | 5 | | 1 |
| Q | 3 | | 3 | | 2 | | | 3 | | | | 4 | | | 1 | 1 |
| R | | 5 | | 2 | 1 | | 3 | | 5 | | | | | 3 | | 5 |

For each of the products P, Q, R, upon statistically analyzing periods from one demand occurrence to the next demand occurrence over a period of three years, the results of the following Table 17 were obtained.

Table 17

|  | Mean period | Standard deviation σ | Secondary period setting |
|---|---|---|---|
| P | 3 days | 0.6 | 7 days |
| Q | 4 days | 0.5 | 7 days |
| R | 3 days | 0.2 | 7 days |

In the above Table 17, for each product name, the period which will fit within 6σ is computed, and the longest such period is set as the secondary period length. Hence 7 days was set as the secondary period length. In this method, the above-described secondary periods are an example of periods enabling a grasp of market fluctuations for the products.

This secondary period may be set artificially based on past experience.

Hence a production plan can be created which can easily accommodate demand trends, so that customer order opportunities are not lost, and unnecessary raw material inventory can be prevented.

Next, a second aspect of this invention is explained, referring to the drawings.

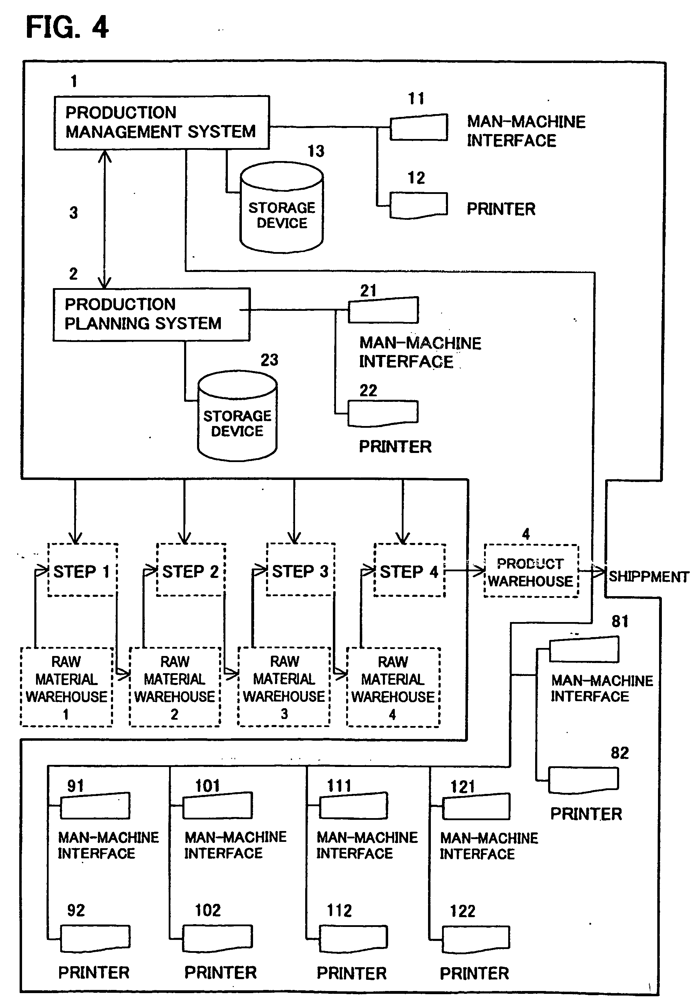

Fig. 4 shows the entirety of a production plan creation system to which a second aspect of this invention has been applied. In this drawing, there are a production management system 1, comprising one or more computers or the like, in turn comprising a computation device, data storage device to store databases, and similar, as well as a production plan creation system 2, comprising one or more computers or the like, in turn comprising a computation device, data storage device to store databases, and similar.

The production management system 1 and production plan creation system 2 are connected by data transfer means 3. such as a communication circuit, floppy disks or minidiscs.

Based on a production plan created by means of this invention, production is executed by a plurality of production steps (1 through 4). The produced products are warehoused in the product warehouse 4, and are shipped as appropriate.

In the figure, the case in which there are four production steps is shown, but this invention is not limited to four steps. Also shown as an example are raw material warehouses (1 through 4) in which are held the starting raw materials for each of the production steps; but the existence of these warehouses is not stipulated in the application of this invention. Raw material warehouses may also exist for only a portion of the steps.

Also, raw material warehouses do not signify the requirements of predetermined zones, and raw materials may also be stacked up in a corner of a step area. The existence of warehouses for each of the plurality of steps is not a necessary condition of this invention.

For purposes of explanation, a product warehouse 4 is shown, but the presence or absence of this product warehouse 4 does not limit the application of this invention. Similarly, products may be stacked up in the final stage of a step, rather than in a predetermined zone such as a warehouse. The essential point is that the inventory amounts of products can be grasped accurately. The presence or absence of a warehouse for this purpose does not impose limitations in the application of this invention.

Also, in Fig. 4 the above production management system 1 and production plan creation system 2 are connected to man-machine interfaces 11, 21, 81, 91, 101, 111, 121, and to printers and other output devices 12, 22, 82, 92, 102, 112, 122, as well as to the storage devices 13, 23.

Here, the man-machine interface 81 and printer 82 are provided mainly to handle information relating to products at a location close to the products, but may be replaced by the man-machine interface 11 and printer 12 connected to the production management system 1, respectively.

The man-machine interfaces 91, 101, 111, 121 and the printers 92, 102, 112, 122 mainly correspond to the plurality of production steps 1 to 4 respectively, and are man-machine interfaces and printers which handle information relating to starting raw materials. These can also be replaced by the man-machine interface 11 and printer 12, respectively.

By means of the production management system 1 and production plan creation system 2 as well as the components connected thereto, not only can a production plan be created which selects optimal steps for the entire period of the production plan, but a production plan can also be created which specifies the raw materials, equipment, product inspection plans, packing plans, and deployment of personnel engaged in production to be used, and various types of management and control can be performed which accompanies product production, such as equipment operation management, production record management, and quality control. Addition of this processing does not in the least impede the action of this invention.

In this case, it is preferable that the production plan creation system 2 be primarily involved in the former production plan, and that the production management system 1 execute the various management and control accompanying the latter production.

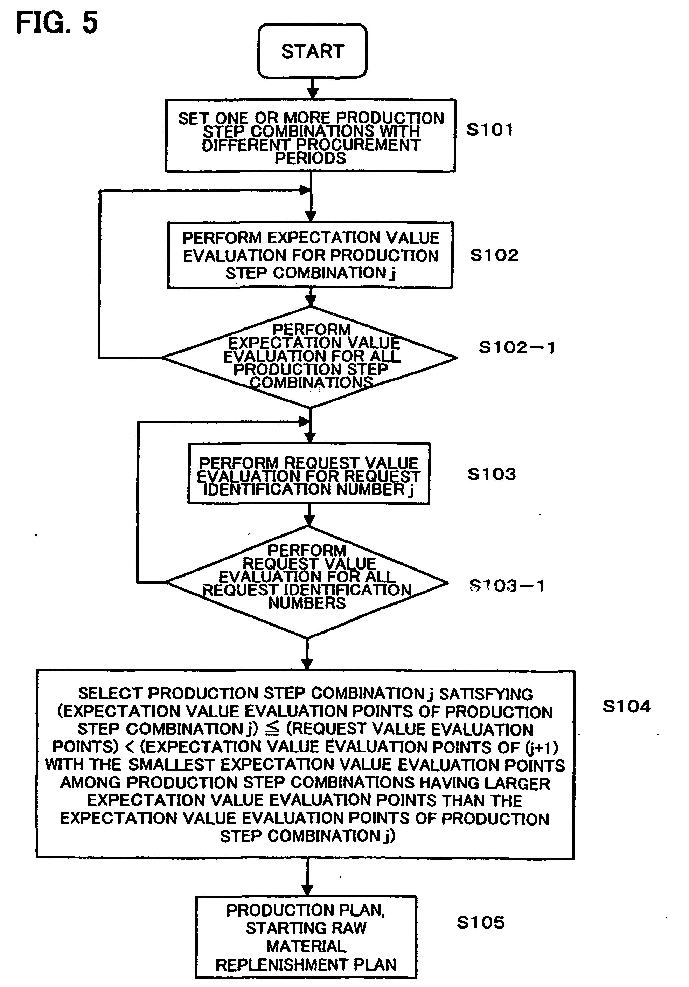

Fig. 5 shows the flow of operation of an embodiment of this invention executed by the systems of Fig. 4. This operation flow is primarily executed and controlled within the production management system of Fig. 4.

When processing is started, one or more combinations of production steps with different procurement periods are set (processing step S101). Here, an example of a combination of one or more production steps is explained.

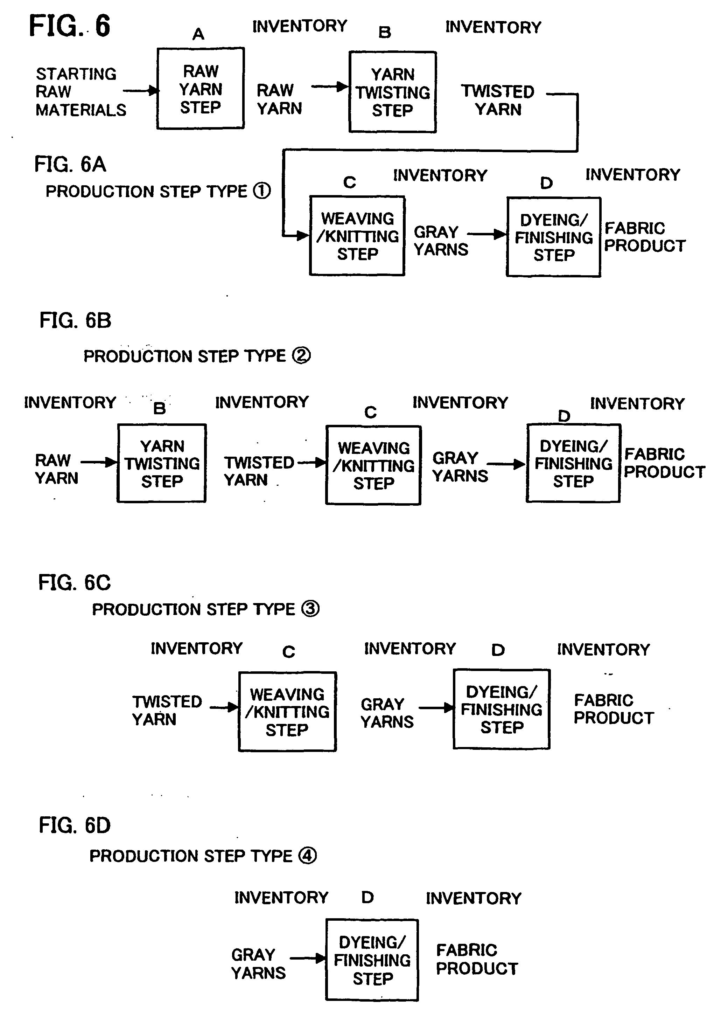

Fig. 6 is an embodiment of a combination of one or more production steps, and is an example having steps from the manufacture of raw yarns to the manufacture of dyed and finished chemical fiber fabric products.

Fig. 6A has steps from the raw yarn step A, which produces a raw yarn from the starting raw material, to yarn twisting step B, which performs yarn twisting processing using the raw yarn as the raw material, the weaving/knitting step C which performs weaving/knitting of the twisted yarn, and the dyeing/finishing step D which performs dyeing of the gray yarn obtained in the weaving/knitting step.

Here, the definitions of raw yarn, filament yarn, spun yarn, the raw yarn step, and similar are as stated in the first aspect of this invention.

A production step has a combination of all these steps, from the raw yarn step to the dyeing/finishing step D; this is defined as production step type (1).

Fig. 6B shows steps from a raw yarn to the production of the fabric product. This is called production step type (2). Taking a raw yarn as the raw material, a plurality of yarn twisting forms are employed to produce twisted yarns of different types. Depending on these yarn twisting forms, the texture and feel of the fabric which is the final product are determined. Hence the raw yarn which is the raw material in the yarn twisting step B can be employed in yarn twisting steps B using a variety of yarn twisting forms, but the range of use of the twisted yarn obtained from a yarn twisting step B with a specific yarn twisting form in the subsequent production step C, D is limited.

In other words, the weaving/knitting step C is the next production step, but the form of weaving/knitting in this weaving/knitting step C decisively determines the texture and feel of the fabric which is the final product. Hence the type of a twisted yarn used as the raw material in this weaving/knitting step C is also limited.

Similarly, the next production step is the dyeing/finishing step D; but depending on the type and pattern of dyeing in this dyeing/finishing step D, the texture and feel of the fabric which is the final product is determined still more decisively. Hence the type of a gray yarn used as the raw material in this dyeing/finishing step D is also limited.

In this production step type (2), a raw yarn is used as the raw material, and after passing through the yarn twisting step B, weaving/knitting step C and dyeing/finishing step D, the fabric product is obtained. Hence in the production step type (2), the production step period from the raw material until the final fabric product is obtained, and therefore the time of delivery, is long, but because the starting raw material is a raw yarn, the inventory risk with respect to demand predictions is small.

The production step type (3) shown in Fig. 6C is defined as the weaving/knitting step C, which employs as the starting raw materials a twisted yarn obtained from the yarn twisting step B in production step type (2) of Fig. 6B, and subsequent steps. In this production step type (3), compared with the production step type (1) of Fig. 6A and the production step type (2) of Fig. 6B, there is a shorter production step until the fabric product, and so the procurement period is shorter. However, if the inventory of twisted yarn which is the raw material increases, there are limits on the twisted yarn used due to the weaving/knitting forms of the weaving/knitting step C, and in addition there are limits on the storage period due to the characteristics peculiar to twisted yarns, so that it is difficult to increase the inventory of a twisted yarn above a certain level.

Fig. 6D defines, as production step type (4), a step which takes as the starting raw material a gray yarn obtained from the weaving/knitting step C. In this production step type (4), compared with each of the above production step types (1), (2) and (3), the production step to the fabric product consists only of the dyeing/finishing step D, and so the time of delivery is the shortest.

However, if the inventory of the gray yarn which is the raw material increases, because there are limits on the gray yarn used due to the dyeing patterns in the dyeing/finishing step D, it is difficult to increase the inventory of the gray yarn above a certain level.

As can be understood from the explanation of Fig. 6, the relation of the combination of production steps to the time of delivery and inventory amount is important.

This invention relates to a method and system enabling creation of production plans in which these relations can be selected appropriately, enabling accommodation of customer demands.

Returning to Fig. 5, as explained in Fig. 6, one or more combinations of production steps with different procurement periods for the respective final products are set (processing step S101). In the example of Fig. 6, four production step combinations are set.

For each of the one or more production step combinations (production step types), an expectation value evaluation is set (processing steps S102, S102-1).

Tables 101 to 103 explain an embodiment corresponding to the flow of Fig. 5. Table 101 shows an example of combinations of production steps set in the processing step S101 of Fig. 5 (in addition to the production step type numbers (1) to (4) of Fig. 6, the case in which the final product is used is taken to be a production step type number (5)), and an example of the setting of expectation value evaluations for products produced by these combined steps (processing steps S102, S102-1).

As in the case of production step type number (5), there may be cases in which a combination of production steps comprises a single step.

Table 101

| Production step type | Step combination example | Example of expectation value evaluation |
|---|---|---|
| ① | A→B→C→D | 1 point |
| ② | B→C→D | 4 points |
| ③ | C→D | 6 points |
| ④ | D | 8 points |
| ⑤ | Product | 10 points |

As an example of settings of expectation value evaluations in processing steps S102 and S102-1, the evaluation value function for individual evaluation indices shown below is used.

$$E_j(x)=f(w_{1jj}e_{1j}(X),w_{2j}e_{2j}(x),\cdots w_{nj}e_{nj}(x))$$

Here $E_j(x)$ is the expectation value for the case in which the final product x is produced by a combination j of production steps. $w_{1j}$, $w_{2j}$, ..., $w_{nj}$ are weightings which indicate the importance of each of the evaluation indices for the combination j of production steps.

$e_{1j}(x)$, $e_{2j}(x)$, ..., $e_{nj}(x)$ are evaluation values for each evaluation index of the final product x for the combination j of production steps.

As another example of a function form, a linear weighted form can also be illustrated.

$$E_j(x)=w_{1j}e_{1j}(x)+w_{2j}e_{2j}(x)+\cdots w_{nj}e_{nj}(x)$$

In order to compute expectation values, the function form to use may be selected automatically by the processing device in the production management system 1 or the production plan creation system 2 (hereafter simply "processing device"; this can also be regarded as a computation device), or may be set appropriately outside the systems.

Or, a skilled worker with extensive experience may set the evaluation values and evaluation functions for each evaluation index based on past experience.

Here, as specific examples of $e_{1j}(x)$, $e_{2j}(x)$, ..., $e_{nj}(x)$, the following may be cited.

$e_{1j}(x)$: Period required from receipt of order until delivery for a product produced by a particular combination j of production steps

$e_{2j}(x)$: Profit of the product produced by the particular combination j of production steps

$e_{3j}(x)$: Difficulty of production when producing using the particular combination j of production steps

$e_{4j}(x)$: Difficulty of raw material preparation when producing using the particular combination j of production steps

$e_{5j}(x)$: Existence or nonexistence of an alternate method for producing using the particular combination j of production steps

$e_{6j}(x)$: Relative merits of production using the particular combination j of production steps compared with an alternative method

However, this invention is not thus limited.

After thus evaluating expectation values (S102-1) for all production step combinations, when corrections are desired, processing returns again to S102, and conditions can be corrected and evaluations performed.

Next, request values of customers requiring final products are evaluated (processing steps S103, S103-1).

After performing request value evaluations in S103-1, when corrections are desired processing returns again to S103, and conditions can be corrected and evaluations performed.

Here, in order to evaluate customer request values, as one example the evaluation value function below may be used for each evaluation index.

$$G(x)=f(v_1g_1(x),v_2g_2(x),\cdots v_ng_n(x))$$

Here $G(x)$ is the request value of a customer requiring the final product x; $v_1$, $v_2$, ..., $v_n$ are weightings indicating the importance of each evaluation index; and $g_1(x)$, $g_2(x)$, .... $g_n(x)$ are evaluation values for each evaluation index for the final product x.

As another example of a function form, a linear weighted form can be cited.

$$G(x)=v_1g_1(x)+v_2g_2(x)+\cdots+v_ng_n(x)$$

In request value computations also, the function form to be used may be selected automatically by the processing device in the system, or may be set appropriately outside the system. Or, a skilled worker with extensive experience may estimate and set the evaluation values and evaluation functions for each customer evaluation index, based on past experience.

Here specific examples of $g_1(x)$, $g_2(x)$, ..., $g_n(x)$ may be as follows.

$g_1(x)$: Period indicating by what date at the latest product delivery is desired from the time of order
$g_2(x)$: Consideration expected to be paid when the product is acquired as requested
$g_3(x)$: Satisfaction level when the product is acquired as requested
$g_4(x)$: Existence or nonexistence of an alternate product when the product can not be acquired as requested
$g_5(x)$: Loss level when an alternate product is used in cases where the product can not be acquired as requested

However, this invention is not thereby limited.

Table 102 is an example of evaluations of customer request values based on the above processing step S103.

Table 102

| Request identification number | Main details of the request | Example of request value evaluation |
|---|---|---|
| (1) | 10 tons, delivery time 10 days | 8 points |
| (2) | 2 tons, delivery time 40 days | 4 points |
| (3) | 1 ton, delivery immediately | 10 points |
| (4) | Anticipated demand 15 tons, in 60 days | 1 point |
| (5) | 3 tons, delivery in 30 days | 6 points |
| (6) | 2 tons, delivery in 25 days | 7 points |

In the example of the above Table 102, the request identification number (3) has, as the details of the request, 1 ton requested for immediate delivery, and is the result with the highest request value evaluation, with an evaluation of 10 points.

Similarly, the request identification numbers (1), (6), (5), (2), and (4) were assigned evaluation points of 8, 7, 6, 4, and 1, respectively.

The combination of production steps determined by the above processing device and the expectation values and request values for these are stored as data in the storage device 13, together with the desired time of delivery and desired product production amount of the delivery recipient, as well as the supply capacity setting amounts and product procurement periods for the respective plurality of production step types.

Next, the processing device reads the expectation value evaluation points and request value evaluation points from the storage device 13, and selects a production step combination j which satisfies the condition (expectation value evaluation points of production step combination j) ≤ (request value evaluation points) < (expectation value evaluation points of (j+1), with the smallest expectation value evaluation points among production step combinations having larger expectation value evaluation points than the expectation value evaluation points of production step combination j). However, if the production step combination (j+1) does not exist, then a decision is made using only (expectation value evaluation points of production step combination j) ≤ (request value evaluation points).

In other words, the expectation values and request values are compared, and a production step combination is selected from among one or more production step combinations, and is allocated to the product requested by the customer (processing step S104).

This step combination selection can be performed according to a prescribed relation, which can be selected arbitrarily; however, it was found that selection so as to satisfy the following relation is preferable.

In other words, first allocation is performed starting from combinations with larger request value evaluations points.

Table 103 shows the results of processing in processing step S104; final product inventory corresponding to step type number (5) is allocated to request identification number (3) with the largest request value evaluation points.

In this case, when a production step combination j is selected which satisfies the condition (expectation value evaluation points of production step combination j) $\leq$ (request value evaluation points) < (expectation value evaluation points of (j+1), with the smallest expectation value evaluation points among production step combinations having larger expectation value evaluation points than the expectation value evaluation points of production step combination j), a production step combination (j+1) does not exist.

Table 103

| Production step type | Example of step combination | Example of optimal step selection result |
|---|---|---|
| ① | A→B→C→D | (4) |
| ② | B→C→D | (2) |
| ③ | C→D | (5), (6) |
| ④ | D | (1) |
| ⑤ | Product | (3) |

Further, in the above Table 103 the request identification number (1) corresponding to the next-largest request value evaluation points, or 8 points, is allocated to the dyeing/finishing step D corresponding to the step type number (4).

The combination of the weaving/knitting step C and dyeing/finishing step D, which corresponds to the step type number (3), is allocated to the request identification number (6) corresponding to 7 request value evaluation points and to the request identification number (5) corresponding to 6 request value evaluation points.

The combination of the yarn twisting step B, weaving/knitting step C, and dyeing/finishing step D is allocated to the request identification number (2), corresponding to the next-largest request value evaluation points, 4. And, the combination of all the production steps--the raw yarn step A, yarn twisting step B, weaving/knitting step C, and dyeing/finishing step D--is allocated to the request identification number (4), corresponding to 1 request value evaluation point. Based on these allocation results, product production plans, corresponding starting raw material replenishment plans, and, when product inventory has been allocated, replenishment plans for the corresponding products, are created (processing step S105).

In the example shown in Tables 101 to 103, raw material inventory setting amounts are excluded from consideration in each of the production step type numbers (1) to (5) (see Table 101).

Here the definition of raw material inventory setting amounts is as already stated in the first aspect of this invention, and in more general terms, is the supply capacity setting amount.

This supply capacity setting amount (or raw material inventory setting amount) can be set by a method similar to that of the first aspect of this invention; similarly to the first aspect, it is preferable that a production amount be set so as to maintain the supply capacity setting amount at the end of the prescribed production plan period.

In actuality, raw material inventory is necessary for production. If there is not sufficient raw material inventory to satisfy the required amount, production of the planned amount may be difficult.

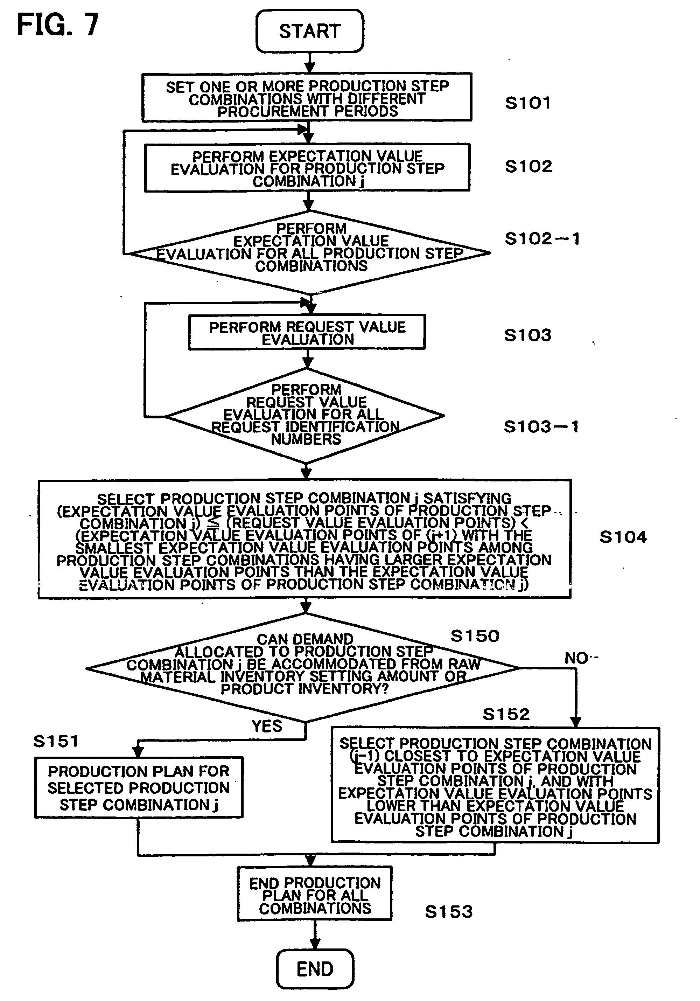

Fig. 7 shows the flow of operation of an embodiment in which the raw material inventory is taken to be the raw material inventory setting amount. In Fig. 7, when processing is started, one or more combinations of production steps with different procurement periods are set (processing step S101). Then, expectation value evaluations are performed for each of the production step combinations (processing steps S102, S102-1).

An example of the processing results of the above processing steps S101, S102, and S102-1 appears in the following Table 104. In Table 104, raw material inventory setting amounts are shown for step type numbers which are combinations of production steps, similarly to Table 101.

Table 104

| Production step type | Example of step combination | Example of expectation value evaluation | Raw material inventory setting amount |
|---|---|---|---|
| ① | A→B→C→D | 10 points | 10 tons |
| ② | B→C→D | 30 points | 8 tons |
| ③ | C→D | 50 points | 5 tons |
| ④ | D | 70 points | 4 tons |
| ⑤ | Product | 100 points | 5 tons |

For example, for the step type number (1), when taken as a combination of all production steps--the raw yarn step A, yarn twisting step B, weaving/knitting step C, and dyeing/finishing step D--the expectation value evaluation is 10 points, and the raw material inventory setting amount is set to 10 tons.

In the case of step type number (2), for the combination of the yarn twisting step B, weaving/knitting step C, and dyeing/finishing step D, the expectation value evaluation is 30 points, and the raw material inventory setting amount is set to 8 tons. The starting raw materials for this step type number (2) are the raw yarn manufactured in the raw yarn step A.

And in Table 104, in the case of the step type number (5), the final product is the fabric manufactured in the dyeing/finishing step D, and the raw material inventory setting amount is set to 5 tons.

Next, request value evaluation is performed (processing step S103). An example of the results of request value evaluation appears in Table 105.

Similarly to Table 102, Table 105 shows the details of requests represented by the request identification numbers (1) through (7), as well as examples of request value evaluations for the respective requests.

Table 105

| Request identification number | Main details of the request | Example of request value evaluation |
|---|---|---|
| (1) | 3 tons, delivery time 10 days, more expensive than normal | 80 points |
| (2) | 1 ton, delivery time 30 days | 50 points |
| (3) | 3 tons, delivery time 10 days, normal price | 70 points |
| (4) | 7 tons, delivery time 40 days | 35 point |
| (5) | 2 tons, immediate delivery | 100 points |
| (6) | 5 tons, delivery time 60 days | 20 points |
| (7) | Anticipated 5 tons after 60 days | 10 points |

Below, first allocation is performed from the largest request value evaluation points.

A production step combination j is selected which satisfies the condition (expectation value evaluation points of production step combination j) ≤ (request value evaluation points) < (expectation value evaluation points of (j+1), with the smallest expectation value evaluation points among production step combinations having larger expectation value evaluation points than the expectation value evaluation points of production step combination j) (processing step S104).

A decision is then made as to whether, for the production step combination j, the allocated requests can be accommodated from the raw material inventory setting amount or product inventory (processing step S150).

If the request can be accommodated from the raw material inventory setting amount or from product inventory (YES in processing step S150), then production begins using the selected production step combination j (processing step S151). If accommodation is not possible (NO in processing step S150), then the production step combination (j-1) is selected which has expectation value evaluation points that are closest to the expectation value evaluation points of the production step combination j, and smaller than the expectation value evaluation points of the production step combination j (processing step S152).

This processing step is performed until the end for all production step combinations (processing step S153).

Table 106 shows the results of optimal production step selection for the request identification numbers (1) through (7), determined from the expectation value evaluation points of Table 104 and the request value evaluation points of Table 105.

Table 106

| Production step type | Example of step combination | Example of optimal step selection result |
|---|---|---|
| ① | A→B→C→D | (6), (7) |
| ② | B→C→D | (4) |
| ③ | C→D | (2), (3) |
| ④ | D | (1) |
| ⑤ | Product | (5) |

In Table 106, for example, the request details of request identification number (5) are 2 tons for immediate delivery; but the raw material inventory setting amount is 5 tons. Thus the 2 tons for immediate delivery can be provided from the raw material inventory setting amount. The request details for request identification numbers (1) and (3) are both 3 tons for delivery in 10 days.

However, the raw material inventory setting amount is, for step type number (4), 4 tons. Hence the total requested amount for request identification numbers (1) and (3) is 6 tons, and it is not possible to accommodate both request identification numbers.

Here the request identification number (1) has, compared with request identification number (3), a price higher than the normal price. Hence because the request value evaluation points are larger, request identification number (1) is given priority, and set to step type number (4).

On the other hand, request identification number (3) is set to step type number (3), which is the combination of the weaving/knitting step C and the dyeing/finishing step D.

Next, since the raw material inventory setting amount has a margin, the request identification number (2) is set, similarly to request identification number (3), to the step type number (3), which is the combination of the weaving/knitting step C and dyeing/finishing step D.

Request identification number (4) has 35 request value evaluation points, and so is set to step type number (2), corresponding to the combination of the yarn twisting step B, weaving/knitting step C, and dyeing/finishing step D.

Request identification number (6) has 20 request value evaluation points, and request identification number (7) has 10 request value evaluation points. Hence these request identification numbers are set to step type number (1), corresponding to the combination of all steps--the raw yarn step A, yarn twisting step B, weaving/knitting step C, and dyeing/finishing step D.

In processing steps S150, S152, in the cases of requests to which no production step combinations could be allocated, because inventory of raw materials was insufficient even for production step combinations with the lowest expectation value evaluation points, replenishment of raw materials must be secured one way or another in order to perform production. In such cases, the matter is discussed with the customer, to decide whether to undertake production by replenishing raw materials one way or another, or to determine that the order cannot be received.

Table 107 and beyond illustrate an embodiment which employs the concepts of primary periods and secondary periods; Table 107, similarly to Table 104, sets raw material inventory setting amounts for the respective step type numbers.

The definitions of the primary period and secondary period are as already stated in the first aspect; similarly to the first aspect, it is desirable that these be regarded as the periods for production plans.

As also stated previously in the first aspect, it is preferable that the primary period be longer than the shortest procurement period among the plurality of production step types, and that the above secondary period be a period in which market fluctuations for the product in question can be grasped.

Table 107

| Production step type | Example of step combination | Example of expectation value evaluation | Prescribed inventory of starting raw materials |
|---|---|---|---|
| ① | A→B→C→D | 100 points | 15 tons |
| ② | B→C→D | 300 points | 10 tons |
| ③ | C→D | 500 points | 7 tons |
| ④ | D | 700 points | 5 tons |

Table 107 (continued)

| Production step type | Example of step combination | Example of expectation value evaluation | Prescribed inventory of starting raw materials |
|---|---|---|---|
| ⑤ | Product | 1000 points | 3 tons |

For example, in Table 107, for step type number (1) which is the case of the combination of all steps--the raw yarn step A, yarn twisting step B, weaving/knitting step C, and dyeing/finishing step D--there are 100 expectation value evaluation points, and the raw material inventory setting amount is set to 15 tons.

In the case of step type number (2), which is the combination of the yarn twisting step B, weaving/knitting step C and dyeing/finishing step D, there are 300 expectation value evaluation points, and the raw material inventory setting amount is set to 10 tons. The starting raw materials for this step type number (2) are the raw yarn produced by the raw yarn step A.

In Table 107, in the case of the step type number (5), the final product is the fabric produced by the dyeing/finishing step D, and, has 1000 expectation value evaluation points, with the raw material inventory setting amount set to 3 tons.

Table 108 shows request amounts for the combination settings of Table 107, for each request identification number before the start of the first secondary period, based on the first through the fourth secondary periods of the primary period. Request value expectations for each are also given.

Table 108

| Request identification number | Main details of the request | | | | Request value evaluation |
|---|---|---|---|---|---|
| | First secondary period | Second secondary period | Third secondary period | Fourth secondary period | |
| (1) | 2 tons after 10 days | | | | 950 |
| (2) | 2 tons, immediate delivery | | | | 1000 |
| (3) | | 2 tons after 10 days | | | 900 |
| (4) | | | 2 tons anticipated after 10 days | | 750 |
| (5) | | | | 2 tons after 10 days | 730 |
| (6) | 5 tons after 30 days | | | | 670 |
| (7) | | | 2 tons anticipated after 30 days | | 550 |
| (8) | | 3 tons after 40 days | | | 420 |
| (9) | | | | 1 ton anticipated after 40 days | 300 |
| (10) | 15 tons after 60 days | | | | 280 |

Table 108 (continued)

| Request identification number | Main details of the request | | | | Request value evaluation |
|---|---|---|---|---|---|
| | First secondary period | Second secondary period | Third secondary period | Fourth secondary period | |
| (11) | | 15 tons anticipated after 60 days | | | 200 |
| (12) | | | 15 tons anticipated after 60 days | | 150 |
| (13) | | | | 15 tons anticipated after 60 days | 100 |

For example, request identification number (1) is in the first secondary period, with 2 tons for delivery after 10 days and 950 request value evaluation points; request identification number (2) is in the first secondary period, with 2 tons for immediate delivery and 1000 request value evaluation points; and request identification number (3) is in the second secondary period, with 2 tons for delivery after 10 days and 900 request value evaluation points.

Table 109 is an example of optimal step type number settings, selected according to the secondary periods set for each of the request identification numbers as shown in Table 108.

Table 109

| Production step type | Example of step combination | Example of optimal step selection results | | | |
|---|---|---|---|---|---|
| | | First secondary period | Second secondary period | Third secondary period | Fourth secondary period |
| ① | A→B→C→D | (10) | (11) | (12) | (13) |
| ② | B→C→D | | (8) | | (9) |
| ③ | C→D | (6) | | (7) | |
| ④ | D | (1) | (3) | (4) | (5) |
| ⑤ | Product | (2) | | | |

In Table 108, request identification number (10) is in the first secondary period, and is a request with 280 request value evaluation points. Hence as shown in Table 109, production by means of a combination of all steps, corresponding to step type number (1), is selected.

Similarly for the requests in the second, third, and fourth secondary periods of Table 108, step type numbers are selected according to the request value evaluation points, as shown in Table 109.

In other words, for each individual request identification number, a production step combination j is allocated such that (expectation value evaluation points of production step combination j) ≤ (request value evaluation points) < (expectation value evaluation points of (j+1), with the smallest expectation value evaluation points among production step combinations having larger expectation value evaluation points than the expectation value evaluation points of production step combination j) (processing step S104 in Fig. 7).

Requests to which each production step combination (the same step type number) is allocated are accommodated from raw material inventory setting amounts, set in advance (processing step S150 in Fig. 7), or if this is not possible, allocations are corrected such that accommodation from the raw material inventory setting amount is possible through the request value evaluation points (processing step S152 in Fig. 7), and a production plan is created (processing step S153 in Fig. 7).

In S152, when the desired product production amount exceeds the supply capacity setting amount and/or the desired time of delivery exceeds the produce procurement period, it is also desirable to select another combination of a plurality of steps so as to satisfy the desired product production amount and desired time of delivery.

Based on these allocation results, a product production plan and corresponding starting raw material replenishment plan, and, when product inventory has been allocated, a corresponding product replenishment plan, are created.

Table 110 shows request amounts when the first secondary period is ended and a plan for the second secondary period is established, for each request identification number before the start of the first secondary period with respect to the combination settings of Table 107. Request value evaluations are also given.

Table 110

| Request identification number | Main details of the request | | | | Request value evaluation |
|---|---|---|---|---|---|
| | First secondary period | Second secondary period | Third secondary period | Fourth secondary period | |
| (1) | 2 tons after 10 days | | | | |
| (2) | 2 tons, immediate delivery | | | | |
| (3) | | 3 tons after 10 days | | | 950 |
| (4) | | | 2 tons anticipated after 10 days | | 800 |
| (5) | | | | 5 tons after 10 days | 790 |
| (6) | 5 tons after 30 days | | | | |
| (7) | | | 2 tons anticipated after 30 days | | 600 |
| (8) | | 3 tons after 40 days | | | 470 |
| (9) | | | | 1 ton anticipated after 40 days | 350 |
| (10) | 15 tons after 60 days | | | | |
| (11) | | 15 tons after 60 days | | | 280 |
| (12) | | | 15 tons anticipated after 60 days | | 200 |
| (13) | | | | 15 tons anticipated after 60 days | 150 |

Table 110   (continued)

| Request identification number | Main details of the request | | | | Request value evaluation |
|---|---|---|---|---|---|
| | First secondary period | Second secondary period | Third secondary period | Fourth secondary period | |
| (14) | | 1 ton, immediate delivery | | | 1000 |
| (15) | | 1 ton after 10 days | | | 940 |
| (16) | | 3 tons after 30 days | | | 660 |

In Table 110, the new request identification numbers (14), (15), (16) are added. Hence the request value evaluation points are also updated.

Table 111 is an example of settings of step type numbers selected corresponding to the request amounts shown in Table 110.

Table 111

| Production step type | Example of step combination | Example of optimal step selection results | | | |
|---|---|---|---|---|---|
| | | First secondary period | Second secondary period | Third secondary period | Fourth secondary period |
| ① | A→B→C→D | | (11) | (12) | (13) |
| ② | B→C→D | | (8) | | (9) |
| ③ | C→D | | (16) | (7) | |
| ④ | D | | (3), (15) | (4) | (5) |
| ⑤ | Product | | (14) | | |

The criteria for selection are similar to those explained in Table 109; expectation values and request values are compared, starting raw material inventory amounts are compared, and allocation to step type numbers (1) through (5) is performed.

In the second secondary period of Table 110, for each request identification number, a production step combination j is allocated which satisfies (expectation value evaluation points of production step combination j) ≤ (request value evaluation points) < (expectation value evaluation points of production step combination (j+1) with expectation value evaluation points closest to that of production step combination j, but larger expectation value evaluation points than production step combination j) (processing step S104 in Fig. 7).

Requests to which each production step combination (the same step type number) is allocated are accommodated from raw material inventory setting amounts, set in advance (processing step S150 in Fig. 7), or if this is not possible, allocations are corrected such that accommodation from the raw material inventory setting amount is possible through the request value evaluation (processing step S152 in Fig. 7), and a production plan is created (processing step S153 in Fig. 7).

Based on these allocation results, a product production plan, corresponding starting raw material replenishment plan, and, when product inventory has been allocated, a corresponding product replenishment plan, are created.

Below are described a method of preparing in advance, as a raw material inventory setting amount for each production step combination, the starting raw materials required when performing production using that combination, as well as a method for setting and preparing in advance a raw material inventory setting amount according to the trends of customers requiring final products.

In one method, request values for past demand records are grouped for each individual product name according to expectation value rank, and statistical processing is performed.

Table 112 is one example of the results of such statistical processing.

Table 112

| Expectation value rank | Request value grouping | Demand records for secondary periods over the past two years | |
|---|---|---|---|
| | | Mean value | Standard deviation |
| Less than 300 points | Less than 300 points | 10.3 tons | 5.1 tons |
| 300 to less than 500 points | 300 to less than 500 points | 7.0 tons | 3.4 tons |
| 500 to less than 700 points | 500 to less than 700 points | 6.1 tons | 0.4 tons |
| 700 to less than 1000 points | 700 to less than 1000 points | 3.0 tons | 0.5 tons |
| 1000 points or more | 1000 points or more | 2.0 tons | 0.4 tons |

Based on these demand records, the following equation is used to set raw material inventory setting amounts.

$$\text{(raw material inventory setting amount for expectation value rank m)} = \text{(demand mean value for expectation value rank m)} + K_m*\text{(demand standard deviation for expectation value rank m)}*f_m\text{(raw material procurement period for expectation value rank m)}$$

Here Km is used to weight demand fluctuations for expectation value rank m, and can be set artificially based on past experience.

Also, $f_m$(raw material procurement period for expectation value rank m) can be defined and used variously according to actual conditions. In this embodiment, the expectation value rank of 1000 points or more is equivalent to the final product; when equivalent to the final product, $f_m$(procurement period for raw material wherein the expectation value rank corresponds to the final product) = 1 is used.

Further, raw material and product raw material inventory setting amounts may be set taking into consideration past experience and predictions of future market trends.

The Km, $f_m$(raw material procurement period for expectation value rank m) and final raw material inventory setting amounts used in this embodiment are listed in Table 113.

Table 113

| Expectation value rank | K m | f(raw material procurement period for expectation value rank m) | Final supply capacity setting amount |
|---|---|---|---|
| Less than 300 points | 0.5 | (raw material procurement period necessary for step combinations with less than 300 points)$^{0.5}$ | 15 tons |
| 300 to less than 500 points | 0.6 | (raw material procurement period necessary for step combinations with 300 to less than 500 points)$^{0.5}$ | 10 tons |
| 500 to less than 700 points | 1.0 | (raw material procurement period necessary for step combinations with 500 to less than 700 points)$^{0.5}$ | 7 tons |

Table 113   (continued)

| Expectation value rank | K m | f(raw material procurement period for expectation value rank m) | Final supply capacity setting amount |
|---|---|---|---|
| 700 to less than 1000 points | 1.5 | (raw material procurement period necessary for step combinations with 700 to less than 1000 points)$^{0.5}$ | 5 tons |
| 1000 points or more | 2.5 | 1 | 3 tons |

In the above Table 113, the above-described calculation result for expectation values less than 300 points is 14 tons; but as a result of market trend predictions, it is predicted that demand will grow in three months, and so a final setting of 15 tons was used.

In this way, the experience and intuition of humans may be added to correct calculated values and set the final value. Also, it is preferable that raw material inventory setting amounts be reviewed in detail, so that no excess inventory is held.

Instead of setting the above supply capacity setting amount according to trends of customers requiring final products as described above, another effective method is to use (supply capacity setting amount) = (probabilistically estimated product demand) + (non-probabilistically predicted product demand amount) (here, "probabilistically estimated product demand amount" and "non-probabilistically predicted product demand amount" have the meanings described above), setting the non-probabilistically predicted product demand amount according to trends among customers requiring the final products.

Here, as an embodiment, setting of the production plan period is discussed. First, the primary period is set to a period longer than the shortest procurement period for products produced by one or more production step combinations.

The step combination example D has the shortest product procurement period, at 10 days, and so a period longer than this is set as the primary period. Then, a time-series analysis of past demand records is performed, and the distribution of periods from one demand occurrence to the next demand occurrence for a certain product is investigated. This period distribution is statistically processed to set the short production plan period.

Table 114 shows a portion of the records of demand occurrence, from the first through the 16th of a certain month, for the products P, Q (figures in the table are in tons units).

Table 114

| Day of month | 1 | 2 | 3 | 4 | 5 | 6 | 7 | 8 | 9 | 10 | 11 | 12 | 13 | 14 | 15 | 16 |
|---|---|---|---|---|---|---|---|---|---|---|---|---|---|---|---|---|
| Day of week | Wed. | Thu. | Fri. | Sat. | Sun. | Mon. | Tue. | Wed. | Thu. | Fri. | Sat. | Sun. | Mon. | Tue. | Wed. | Thu. |
| P | 3 | | 2 | | | 3 | | 3 | | 1 | | | 3 | | 4 | |
| Q | 1 | 1 | | | | 5 | | | 3 | | | | | 2 | | |

Upon performing statistical processing of the periods from one demand occurrence to the next demand occurrence over three years for the products P, Q, the results of Table 115 were obtained.

Table 115

|   | Mean interval | Standard deviation σ | Secondary period setting |
|---|---|---|---|
| P | 2.5 days | 0.5 | 7 days |
| Q | 2.5 days | 0.4 | 7 days |

In Table 115, for each product name, the period which will fit within 6σ is computed, and the longest period is set as the secondary period length. Hence 7 days was set as the secondary period length. The secondary period and primary period may also be set artificially based on past experience.

In the above aspect, steps used to manufacture fabric as the final product from raw yarn production were discussed; but the application of this invention is not limited to production of such fabric products.

In the second aspect of this invention, similarly to the first aspect of this invention, it is preferable that production amounts be set so as to maintain the above supply capacity setting amounts at the end of the production plan period, so that supply capacities can easily be grasped for each step combination and production plans can be created rapidly.

Similarly to the first aspect of this invention, it is preferable that the supply capacity setting amounts be set using the following equation:

supply capacity setting amount = probabilistically

estimated product demand amount + non-probabilistically

predicted product demand amount

(here, the probabilistically estimated product demand amount is the product demand amount calculated probabilistically as a function of the procurement period over the above primary period, and the non-probabilistically predicted product demand amount is an amount set arbitrarily without employing calculations to correspond to demand fluctuations which cannot be calculated probabilistically, and may be negative).

Conversely, in the first aspect of this invention, similarly to the second aspect of this invention, the supply capacity setting amount can be set according to trends among customers requiring final products.

Also, in the first aspect of this invention, it is preferable that the above non-probabilistically predicted product demand amount be set according to trends among customers requiring final products.

Next, a third aspect of this invention is explained.

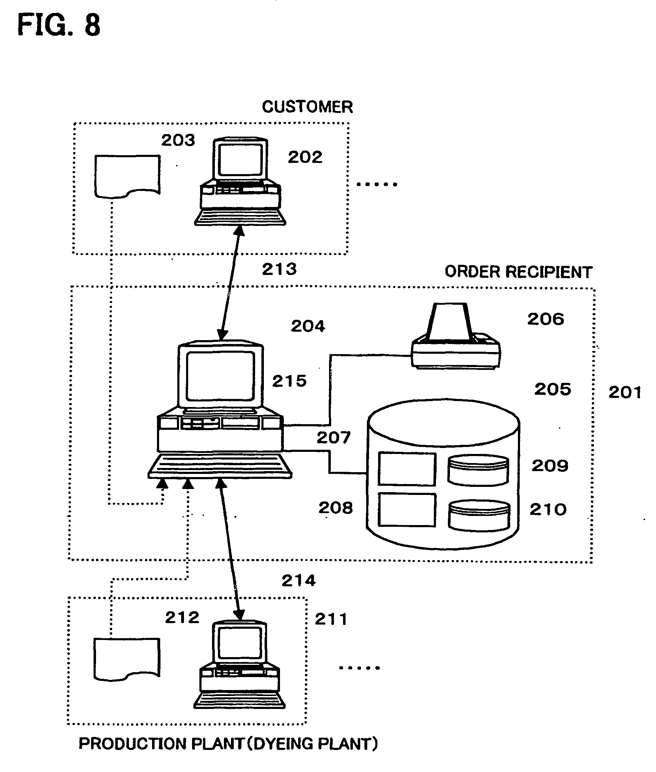

Fig. 8 shows the configuration of an embodiment of a production plan creation system to which the third aspect of this invention is applied. Here, as one example, dyeing processing in the fiber industry is assumed.

In the figure, a "customer" is a source of orders for dyed fabric products; normally there exist a plurality of customers. An "order recipient" is a producer of the above-described raw yarns and gray yarns, which, on receiving an order from the above customer, issues an order for dyeing processing to the dyeing plant described below, and supplies the gray yarns which are the raw materials. A "production plant (dyeing plant)" is a plant which performs the production of products, that is, dyeing processing; for one of the above order recipients, there may exist a plurality of production plants.

As shown in the drawing, a personal computer or other customer terminal 202 is installed at the customer's site, and products are ordered from this customer terminal 202 via the Internet or a dedicated line network 213. Customers which do not have a customer terminal 202 installed place orders via fax machine or telephone to transmit the order data 203.

At the site of the order recipient, a production plan creation system 201 to which this invention is applied is installed; here, production (processing) space in production plants is allocated for each order. The production plan creation system 201 comprises a computer 204, printer 206, and other necessary accessory equipment, as shown in the drawing, and is connected to the above customer terminal 202 and to a production plant terminal 211, described below, via the Internet or via dedicated line networks 213, 214. Within the computer 204 are memory 215, a storage device 205 and similar; in the storage device 205 are stored execution means (207, 208) to execute processing for allocation of the above production (processing) space, as well as data (209, 210). This storage device 205 may also exist outside the computer 204. Though not shown, the production plan creation system 201 can also be configured using a plurality of computer systems connected via a LAN or similar.

A production plant terminal 211, which is a personal computer or similar, is installed in the production plant (dyeing plant), and transmits production (processing) space data secured for the above order recipient and receives the results of production space allocation executed by the above production plan creation system 201, via the above network 214. In a production plant where a production plant terminal 211 is not installed, production space data 212 and other information is exchanged via fax machine or telephone.

The production plan creation system 201 in an embodiment configured as above employs a method described below to execute production space allocation processing in bottleneck steps for an order each time an order is received, attempting to contribute to an efficient production plan, based on data on available production space sent from production plants and order data sent from customers.

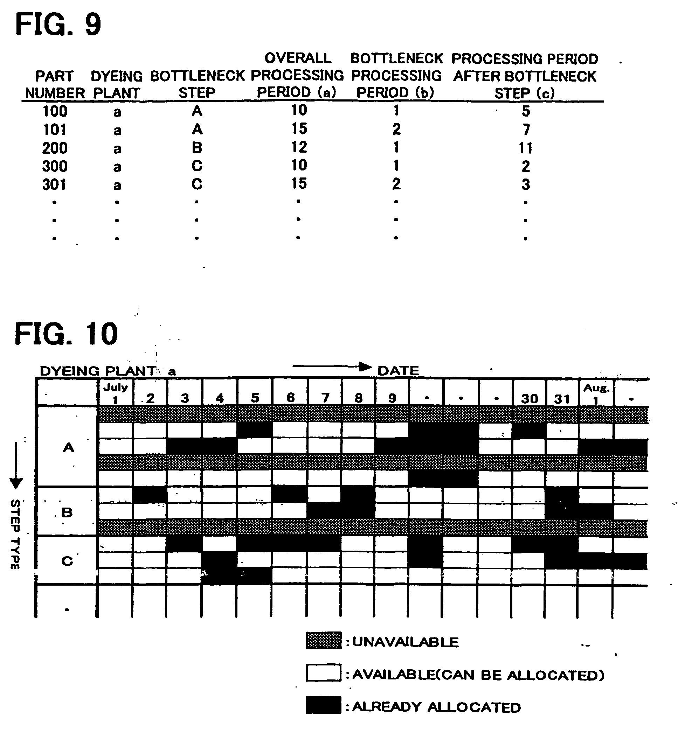

Fig. 9 shows one example of the data of a production master database 210 stored in a storage device 205 of the production plan creation system 201. Normally products in dyeing processing are managed using part numbers, and the steps necessary for processing, processing period for each step, and other parameters are determined by the part number. Hence order data from customers comprises these part numbers and times of delivery. The production master database 210 is a database which records parameters determined in advance for each part number, as indicated in Fig. 9, and in particular, stores steps which become bottleneck steps, the overall processing period (a), processing periods for bottleneck steps (b), and processing periods subsequent to bottleneck steps (c), for use in production space allocation processing.

"Bottleneck step" means a step with a production rate lower than the immediately preceding step. In this specification, the production rate refers to the amount of production possible within a prescribed amount of time, and is expressed, for example, as tons/hour or tons/day.

The production rate itself is not fixed, but changes depending on the part number being produced and other factors, and may also change with the season. In addition, if for some reason any of a plurality of parallel step components can no longer be used, the production rate will decline.

"Bottleneck step" need not necessarily refer to all steps with a lower production rate than the immediately preceding step, but may be selected as appropriate.

From this database it is seen that; for example, dyeing processing for part number 100 is performed in dying plant a, and requires 10 days in all; step A, which requires a one-day processing period, is a bottleneck step, and five days are required for completion after the step A.

In this specification, unless stipulated otherwise, it is assumed for purposes of simplification that one bottleneck step exists. When this one bottleneck step is the largest bottleneck step, allocation to the step which is the greatest impediment to production is performed first, and so this method is often advantageous.

However, selection for some reason of a bottleneck step other than the largest bottleneck step also falls within the scope of this invention, and selection of a plurality of bottleneck steps likewise falls within the scope of this invention.

In the following explanation, bottleneck steps are considered as steps to determine available production space and production periods; however, such steps need not be bottleneck steps, that is, they need not be steps with a production rate lower than that of the immediately preceding step, and such steps may be selected on the basis of experience or on arbitrary grounds.

The above production master database 210 is referenced each time order data is received.

Fig. 10 shows one example of data of a production master database 209 stored in the storage device 205. Here, for each dyeing plant, the production space of steps, secured for the order recipient having this production plan creation system 201, which are bottleneck steps, as well as the results of production space allocation processing for received orders, are displayed in day units. In the drawing, the shaded portions represent portions which are not secured for the order recipient and cannot in any case be used; allocation processing is performed for the available white portions. Fig. 10 shows the example of dyeing plant a; for example, in the case of step A, there are originally five spaces, of-which three spaces are secured for the order recipient, and the blackened spaces have already been allocated for processing for which orders have been received. This production space database 209 is accessed and updated each time there is production space allocation processing.

As shown in Fig. 8, the storage device 205 stores production space setting means 207. It is preferable that this production space setting means 207 be installed as a program, and executes processing to reflect the production space data received from production plants (production plant terminals 211), that is, production space data secured for the order recipient in question, in the above production space database 209.

Similarly, production space allocation means 208 are stored in the storage device 205, preferably installed as a program. The production space allocation means 208 is a principal portion of the production plan creation system 201, and, each time an order is received, executes processing to allocate production space for the order. Below, the details of processing in this production plan creation system 201 are explained, centering on allocation processing upon order receipt.

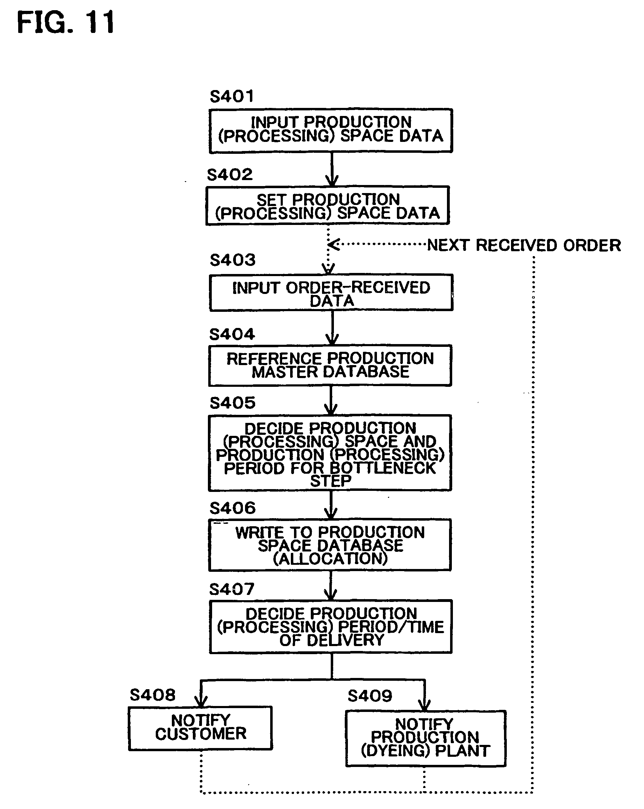

Fig. 11 shows the flow of processing in the production plan creation system 201 of this embodiment. First, as stated above, production space data for bottleneck steps secured for the order recipient in question is sent from each of the dyeing plants, either via the network 214 or by a different method, with a prescribed frequency described below. The data sent is input to the production plan creation system 201 by confirmation or by the input operation of the person in charge at the order recipient (step S401 in Fig. 11), and is reflected in the production space database 209 as available space by the above production space setting means 207 (step S402 in Fig. 11). Specifically, the white-frame portion (which can be used (allocated)) in Fig. 10 is set.

Next, when the order recipient receives an order from a customer, the person in charge at the order recipient inputs to the computer 204 of the production plan creation system 201 the order data 203, transmitted from the customer terminal 202 or conveyed by fax machine, by telephone, or by other means (step S403 in Fig. 11). When sent from the customer terminal 202, the data sent is confirmed on the screen of the computer 204, and can be input by a simple button operation or similar.

As explained above, the input order data (received-order data) comprises a part number and time of delivery; the above production space allocation means 208 of the production plan creation system 201 accesses the above production master database 210 using the part number as a key, and acquires information relating to the processing of the order, and specifically, information on the dyeing plant, bottleneck steps, and processing periods ((a), (b), (c)), examples of which appear in Fig. 9 (step S404 of Fig. 11).

Next, the production space allocation means 208 accesses the production space database 209, and acquires the portion of the available production (processing) space data which corresponds to the data for the dyeing plant and bottleneck step acquired. After this acquisition, the production space allocation means 208 performs processing to decide the production (processing) space and production (processing) period for the processing in the bottleneck step for the order in question based on the production (processing) space data and the acquired processing periods ((a), (b), (c)) data (step S405 in Fig. 11). This decision processing is performed such that the end of the processing for the order occurs within a range which satisfies the time of delivery contained in the order data, at the latest time at which processing by the bottleneck step is possible. This point is a major feature of this production plan creation system 201, the processing details of which are discussed in detail below.

Next, the portions of the above decided production (processing) space and production (processing) period of the production space database 209 are taken to have been decided by the production space allocation means 208, and allocation of production space in the bottleneck step for the order in question ends (step S406 of Fig. 11).

When a plurality of bottleneck steps are chosen, allocation of production space and a production period for the next bottleneck step is performed.

In this case, the production space and production period for the step SN are allocated such that the end of the next bottleneck step is the latest, within the range satisfying the time of delivery for the order. This corresponds to the above-stated "when an order is received, processing is performed in which an unselected step SN among the one or more steps is selected, and the production space and production period for the step SN are allocated such that the end of the step SN occurs latest within the range in which the time of delivery of the order is satisfied."

In this way, allocation is executed for all selected bottleneck steps.

The order in which allocation to a plurality of bottleneck steps is performed can be decided arbitrarily according, for example, to empirical rules; however, in order to secure a margin in the production plan, it is preferable that allocation be performed in order from bottleneck steps with lower production rates.

Based on these allocation results, steps other than bottleneck steps are estimated to be able to perform processing without wait times, and the overall production (processing) period and time of delivery for the order in question are decided (step S407 in Fig. 11).

The customer which had placed the order is notified of the time of delivery thus determined via the network 213 or by fax machine or telephone (step S408 in Fig. 11). Or, the production plan creation system 201 of the order recipient may be provided with a web server, and the time of delivery data displayed on a web page prepared on the server, in such a manner that the customer can access the web page from the customer terminal 202 with a browser. On the other hand, the dyeing plant is also notified, in the form of a production plan at the time of receipt of the order, of the production (processing) space and production (processing) period information thus decided (step S409 in Fig. 11).

The processing explained above (steps S403 to S409 in Fig. 11) is repeated each time an order is received, so that production space allocation processing upon receipt of an order, that is, production planning upon order receipt, is performed promptly by the order recipient by means of the production plan creation system 201. Consequently it becomes possible to provide the customer with an early response regarding time of delivery, and the accuracy thereof is improved due to allocation processing which takes bottleneck steps into consideration. Further, because production space planning is performed by the order recipient for a plurality of related dyeing plants, various adjustments can be made, and a production plan which is efficient overall for the order recipient can be created.

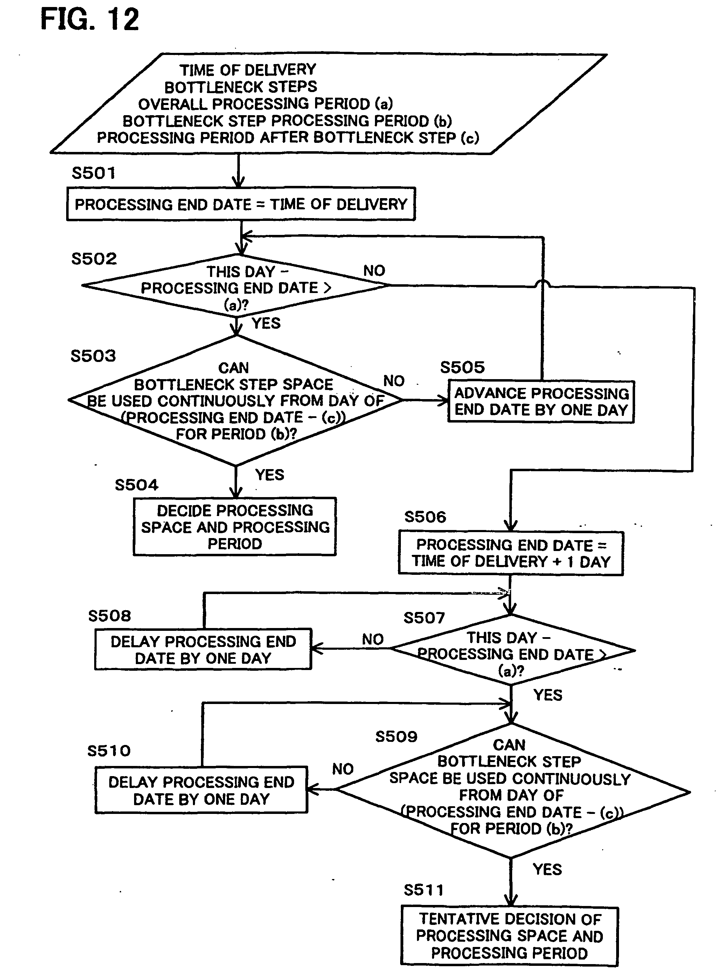

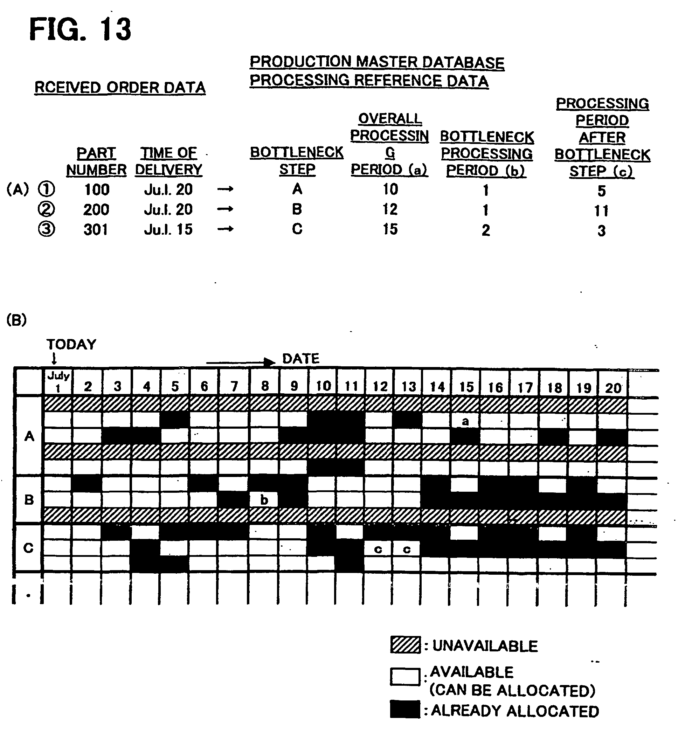

Fig. 12 is a flowchart showing an example of the contents of decision processing for the production (processing) space and production (processing) period in a bottleneck step by the above-described production space allocation means 208 (step S405 in Fig. 11). Fig. 13 explains the manner in which, through this processing, received-order data is reflected in the production space database 209. In Fig. 13, (A) shows three examples of received-order data and the corresponding data of the production master database 210; (B) shows the manner of production space allocation for the above three received-order data items. Below, Figs. 12 and 13 are used to explain in detail the allocation processing.

As shown in Fig. 12, the five data items in the drawing are input to the production space allocation means 208 from the received-order data and the corresponding data in the production master database 210. For the examples shown in (A) of Fig. 13, for the received-order data (1), time of delivery = July/20, bottleneck step = A, overall processing period (a) = 10 days, and similar are input.

Next, the "processing end date" is set to the time of delivery input above, that is, to the received-order data time of delivery (step S501 in Fig. 12). "Processing end date" means the date on which the entirety of the processing for the order ends. Hence the "processing end date" becomes the time of delivery result of allocation processing. In the example of Fig. 13, for received-order data (1), (2), (3), the "processing end dates" are July/20, July/20, and July/15, respectively.

Next, a check is performed to determine whether the period from the day on which this processing is performed (hereafter called "this day") to the above newly set "processing end date" is longer than the previously input entire processing period (a) (step S502 in Fig. 12). If the period is shorter, the processing cannot be performed by the time of delivery, and processing jumps to step S506 of Fig. 12, explained below. If the period is longer, processing proceeds to step S503 of Fig. 12. For all of the order-received data (1), (2), (3) of Fig. 13, processing proceeds to step S503.

In step S503, a check is performed to determine whether the processing space for the bottleneck step can be secured to end by the above newly set "processing end date". To do so, data on the available processing space in the above-described production space database 209 is referenced. Specifically, a check is performed to determine whether processing space corresponding to the bottleneck step processing period (b) can be used continuously in a retrospective way, from the date that goes back in time from the "processing end date" by the number of days of the processing period (c) after the bottleneck step. If, as a result of this check, the space can be secured, the secured space is finalized as the processing space for the bottleneck step for the order in question over the processing period (step S504 in Fig. 12).

For the example of received-order data item (1) shown in Fig. 13, the processing space (portion "a" in (B) of Fig. 13) can be secured for one day (the bottleneck step processing period (b)) from July/15, which is five days (the processing period (c) after the bottleneck step) earlier than the date July/20 which is the "processing end date" = time of delivery; hence this space is allocated to the processing of the bottleneck step A for received-order (1). On the other hand, for the received-order data items (2) and (3), when a similar check is performed it is found that processing space cannot be secured for either. As is clear from the drawing, in the case of received-order data item (2), the space of the bottleneck step B cannot be used on July/9, and in the case of received-order data item (3), space for two days going back from July/12 cannot be secured.

Thus when space cannot be secured, the "processing end date" is moved back one day (step S505 in Fig. 12), and processing is repeated from step S502 in the above Fig. 12. In the case of the received-order data item (2) in Fig. 13, when the "processing end date" = July/19, in the previous step S503 the processing space (portion "b" in (B) of Fig. 13) can be secured on July/8, so that the processing space and processing period for the bottleneck step B for this order are finalized.

On the other hand, in the case of received-order data item (3) in Fig. 13, when the "processing end date" = July/14, the condition of step S502 in Fig. 12 no longer obtains. That is, it already becomes impossible to perform the processing by the time of delivery. In such cases, processing proceeds to step S506, and the "processing end date" is set to the time of delivery plus one day. Then, the same check as in step S502 is again performed (step S507 in Fig. 12), and the "processing end date is moved forward one day at a time until the conditions obtain (step S508 in Fig. 12).

This is equivalent to the above-stated "during processing to allocate the production space and production period of the step SN, when a situation occurs such that allocation within the range satisfying the above time of delivery is not possible."

In such cases, processing is performed to allocate production space and a production period such that the bottleneck step end occurs at the earliest, within the range in which the above time of delivery is not satisfied.

When there are a plurality of bottleneck steps, the need arises to review the allocation for bottleneck steps preceding a bottleneck step for which the above situation arises. In such cases, with respect to allocation of the production space and production period of a bottleneck step preceding the bottleneck step for which such a situation has arisen, when there is a separate bottleneck step which is within the range which does not satisfy the above time of delivery and which follows the bottleneck step for allocation when seen in the order of the previous allocation processing, processing to allocate production space and the production period is performed in the order opposite the previous allocation processing such that the bottleneck step end occurs at the earliest, within the range in which the production period is satisfied.

The following is an explanation of the processing in such a case, for an example of three steps A, B, C, allocated in this order, when conditions arise such that the time of delivery is not satisfied by C.

First, allocation of C is performed. At this time, the earliest production period is chosen, within the range in which the time of delivery is not satisfied.

Next, allocation of B is performed. At this time, the earliest production period is chosen, within the range in which the time of delivery is not satisfied, and under the condition that the production period for C is satisfied.

Finally, allocation of A is performed. At this time, the earliest production period is chosen, within the range in which the time of delivery is not satisfied, and under the'condition that the production periods for C and B are satisfied.

Returning to the original explanation of the case in which one bottleneck step is selected, at the stage in which conditions are established, the same check to secure space performed in the above step S503 is performed (step S509 in Fig. 12), and with respect to this also, the "processing end date" is moved forward one day at a time until space is secured (step S510 in Fig. 12). Then, when space is secured, this space is tentatively finalized as the processing space and processing period for a bottleneck step for the order (step S511 in Fig. 12). In the case of received-order data item (3) in Fig. 13, when the "processing end date" = July/16, space for two days moving back in time from July/13 can be secured (portion "c" in (B) of Fig. 13), and the conditions of step S509 are met, so that this space is tentatively allocated. The decision in step S511 is performed in the case in which the time of delivery requested by the customer cannot be satisfied, and so this is a tentative decision, and whether the processing is actually performed is left to the judgment of the business person in charge.

Thus as has been explained using one example, allocation of production space for each received order in this production plan creation system 201 is performed such that production (processing) of the step SN ends latest, within the range in which the time of delivery is satisfied. Consequently, overall the production can be performed at a later date, and accordingly, compared with the prior art there are more cases in which production (processing) becomes possible even when an order with a short time to delivery is subsequently received, so that on the whole, the operating rate of production space can be improved.

In the above specific example, the explanation assumed that one bottleneck step existed for each part number (product); however, production space allocation can be executed using a similar approach when two or more bottleneck steps exist. Further, in plants where the bottleneck step is not clearly known, all necessary steps can be regarded as bottleneck steps, and a similar approach can be applied.

With respect to setting the above available production space and production period which are the basis for allocation of production space and production periods (steps S401, S402 in Fig. 11), a primary period (also called a long production plan period in the third aspect of this invention) based on long-term order receipt predictions, such as for example two months or three months, is set. In this production plan creation system 201, this available production space, that is, production space which should be secured in advance, is reviewed at every secondary period obtained by subdividing the above long production plan period (in the third aspect of this invention, also called a short production plan period), for example, every week. Specifically, production space which is to be secured within the forthcoming short production plan period is reviewed, based on the data of the production space database 209 in which production space for the above received order is allocated, as well as information on predictions of new order receipts possessed by the business person in charge or similar. And if necessary, allocation of production space for a received order can be modified.

As stated previously, production rates can vary, and so as explained above, it is preferable that production space and production periods be set for primary periods based on long-term predictions of order receipts, so that the settings do not tend to be greatly affected by short-term fluctuations.

Thus reviews of production space at each short production plan period have a number of merits for both order recipients and for production plants, including improvement of the accuracy of required production space information, the ability to use excess production space for other order recipients, and the ability to accept more orders than had been scheduled through the expansion of production space. Further, by utilizing this production plan creation system 201, information related to production plans is transmitted to production plants at each long production plan period, at each short production plan period, and on receipt of each order, so that production space can be operated more efficiently than in the prior art.

The computations, tables, and plan creation of the above first through third aspects of this invention can be performed automatically using a computer system; or, various data can be set and recorded in a database automatically or with the aid of input from an input terminal, and the prescribed computation processing performed by executing a program, created in advance, using a prescribed computation device or processing device. By adopting such a system, production plans which conventionally have relied heavily on intuition and experience can be created promptly and objectively.

In this embodiment, a specific example of a dyeing plant in the fiber industry was employed; however, a similar method and system can be applied to manufacturing industries in which order-based production is performed through a plurality of steps.

The scope of protection of this invention is not limited to the above aspects and embodiments, but extends to the invention described in the scope of claims and to inventions equivalent thereto.

In the above invention, when there exist an order-receiving division which receives the above orders and a production plant which performs the above production according to instructions from the above order-receiving division, if the above order-receiving division is made to perform at least the above second step, a circumstance in which the production plant creates separate production plans can be avoided, and creation of more integrated production plans is possible.

INDUSTRIAL APPLICABILITY

By means of the first aspect and second aspect of this invention, a production method and system are provided which are appropriate to products which are particularly subject to trends in popularity, such as when the final product is fabric.

In particular, this invention is useful, in all its aspects, when the product is a fiber product.

These aspects are not necessarily applied only to products which are particularly subject to trends in popularity, such as when the final product is fabric, but can be utilized as production plans and production plan creation systems in a general sense, regardless of the type of product, so long as there is conformance to the essence of this invention.

Further, as described above, it has become possible to provide an objective production method and system even for products which are especially subject to trends in popularity and demand for which tends to fluctuate, where conventionally there has been reliance on human experience and intuition, and it has been thought that processing by a computer system was not possible.

Further, if a program is created for the purpose of performing such computations and creating such tables, then the same computation results can be viewed and judgments of production plans made simultaneously at a plurality of locations, and in addition the computations and table creation can be corrected at various input terminals, so that a production method and system which are prompt, reliable, and inexpensive can be provided.

In particular, when probabilistically estimated product demand amount is adopted for estimation of the above supply capacity setting amounts, and when production step combinations are selected to correspond to customer requests from combinations of expectation value evaluation points and request values of customers, objective production plan creation becomes possible.

Further, by means of the third aspect of this invention, allocation of production space when an order is received is performed promptly, by a method such that production ends at a late date within the range in which the time of delivery is satisfied. Hence the opportunities for receiving orders with short times for delivery are increased, production space can be used more efficiently than in the prior art, and customers can be quickly informed of times of delivery. And, by reviewing at each short production plan period the production space which can be secured and used for production, the productivity of production plants can be further improved.

The above third aspect of this invention can also be combined with the above first or second aspects of this invention; the broad outlines of the production plan may be determined according to the above first or second aspects of this invention, and this may be further broken down to determine how steps will actually be allocated in a consistent, objective, and prompt manner, for great advantages. In particular, in all cases it is possible and useful to introduce in common the concepts of a primary period and a secondary period.

With respect to the third aspect of this invention, if a program is created to perform such computations and creation of tables, the same computation results can be viewed and judgments of production plans made simultaneously at a plurality of locations, and it is also possible to correct these computations and created tables from various input terminals. Thus a production method and system can be provided which are prompt, reliable, and low in cost.

**Claims**

1. A method for the production of the same products delivered to one or more delivery recipients with a desired times of delivery and a desired product production amounts so as to deliver the desired amount of products to the delivery recipients in the desired times, wherein the same products are produced as final products using a starting raw material inventory or an intermediate raw material inventory/an intermediate products inventory via a plurality of productions steps, **characterized in that** the production of the products comprises the steps of:

   setting a plurality of production step types by classifying said production steps into said plurality of production step types with different procurement periods in order that at least one of said classified production step types produces said same products as the final products produced from the starting raw material inventory or the intermediate raw material inventory/the intermediate products inventory, as well as a prescribed production plan period;

storing data in a database for the prescribed production plan period, wherein the data include said desired times of delivery and the corresponding desired product production amounts for a delivery recipient, and supply capacity setting amounts and product procurement periods for each of the plurality of production step types; and

prior to the start of the production plan period, for each of the desired product production amounts, the following steps a1 - a3 are respectively carried out from that of having the shortest desired time of delivery:

a1: comparing the desired product production amount with final product inventory amount, wherein if the final product inventory amount exceeds the desired product production amount, the desired product production amount is accommodated using the final product inventory, otherwise;

a2: selecting a production step type which has the product procurement period not exceeding the desired time of delivery of the products for which the final product inventory is exceeded, wherein, when a plurality of step types are selected as the production step type, the production step type having longer procurement period is selected; and

a3: allocating the desired product production amount to the selected production step type, wherein in cases where the desired product production amount exceeds the supply capacity setting amount in the allocation, the allocated production step type is reallocated to the other selected production step type having longer product procurement period.

2. The production method according to claim 1, further comprising the steps of:

setting each of said production step types as a production step combination of one or more production steps when the production steps are arranged in series so as to produce the final products;

for all step production combinations, evaluating the corresponding expectation value evaluation points, and further evaluating request value evaluation points of customers required for producing the final products;

for the prescribed production plan period, storing the desired time of delivery and desired product production amount of the delivery recipient, supply capacity setting amounts and product procurement periods for each of the plurality of production step types, and said expectation value evaluation points and said request value evaluation points into the database;

comparing the expectation value evaluation points with the request value evaluation points; and

choosing the optimal step combination as a production combination j among said step production combinations satisfying the following relation defined by the expression {(expectation value evaluation points of the production step combination j) $\leq$ (request value evaluation points) < (expectation value evaluation points of the production step combination (j+1) with the smallest expectation value evaluation points among the production step combinations having larger expectation value evaluation points than the expectation value evaluation points of the production step combination j)},

wherein, when the desired product production amount exceeds the supply capacity setting amount and/or the desired time of delivery exceeds the product procurement period, another production step combination of a plurality of production steps which satisfies the desired product production amount and desired time of delivery is selected.

3. The production method according to claim 1, wherein the production amount is set so as to maintain said supply capacity setting amount at the end of said prescribed production plan period.

4. The production method according to claim 1, wherein said prescribed production plan period is taken to be a primary period, and the primary period is divided into a plurality of secondary periods, and each of these periods is regarded as a production plan period.

5. The production method according to claim 4, wherein, for production plans for said secondary periods, said supply capacity setting amount is set using the following equation:

supply capacity setting amount = probabilistically

estimated product demand amount + non-probabilistically

predicted product demand amount,

wherein the probabilistically estimated product demand amount is the product demand amount calculated probabilistically as a function of the procurement period over said primary period, and the non-probabilistically predicted product demand amount is an amount set arbitrarily without employing estimations to correspond to demand fluctuations which cannot be estimated probabilistically, and may be negative.

6. The production method according to claim 1, wherein said supply capacity setting amount is set according to the trends of customers requiring final products.

7. The production method according to claim 5, wherein said non-probabilistically predicted product demand amount is set according to the trends of customers requiring final products.

8. The production method according to claim 4, wherein said primary period is longer than the shortest procurement period among the plurality of production step types, and said secondary periods are periods in which market trends for the products can be grasped.

9. The production method according to claim 1, in which at least one of the production steps are processed via a plurality of steps based on orders, further comprises the steps of:

   storing data including at least the data of bottleneck steps for processing said plurality of steps, an overall processing period for processing said plurality of steps, processing periods for the corresponding bottleneck steps, and processing periods subsequent to the corresponding bottleneck steps, wherein the bottleneck step is defined as a step having a production rate lower than that of the immediately preceding step;
   determining available production processing spaces, i.e. available production spaces, and production processing periods, i.e. available production periods, in advance for said plurality of steps;
   when the order is received, based on the stored data in the database, allocating the available production space and production period to the steps having a bottleneck step for processing the order such that the end of the bottleneck step occur latest within the range in which the time of delivery of the order is satisfied, wherein, when the steps for processing for the order have a plurality of bottleneck steps, the production space and production period are allocated for said all bottleneck steps such that the end of the next bottleneck step is latest within the range satisfying the time of delivery for the order; and
   creating a production plan so as to produce the ordered products based on the allocation of the production space and production periods.

10. The production method according to claim 9, wherein, if during processing to allocate production space and a production period for said bottleneck step, there occurs a situation in which allocation is not possible within the range which satisfies the time of delivery of said order, then with respect to allocation of production space and a production period for a bottleneck step preceding the bottleneck step for which this situation has arisen, when there is a separate bottleneck step which is within the range in which the time of delivery of said order is not satisfied and which follows the bottleneck step for allocation as seen in the allocation processing order of claim 9, processing to allocate production space and a production period such that the end of the bottleneck step occurs earliest within the range which satisfies the production period is performed, in the order opposite the allocation processing order of claim 9.

11. The production method according to claim 9, wherein the prescribed production plan period is taken to be a primary period, and the primary period is divided into a plurality of secondary periods, and said first step is performed for the primary period; and, having a further step in which the available production space and production period determined in said first step are updated in each of said secondary periods.

12. The production method according to claim 9, wherein said product is a fiber product.

13. The production method according to claim 9, wherein, when there exist an order-receiving division which receives said order and a production plant which performs said production according to instructions from said order-receiving division, at least said second step is performed by said order-receiving division.

14. A production plan creation system for the production of the same products delivered to one or more delivery recipients with a desired times of delivery and a desired product production amounts so as to deliver the desired amount of products to the delivery recipients in the desired times, wherein the same products are produced as final products from a starting raw material or an intermediate raw material by a plurality of production step types into which a plurality of production steps classify, **characterized in that** the system comprises:

a database for storing data including said plurality of production step types with different procurement periods to produce the same products, supply capacity setting amounts and product procurement periods for each of said plurality of production step types, and desired times of delivery and desired product production amounts for a delivery recipient for a prescribed production plan period; and,
a computation device which includes means for performing steps b1 - b3 from that of having the shortest desired time of delivery, prior to the beginning of the production plan period, for each of the desired product production amounts, respectively, namely:

b1: means for comparing the desired product production amount with final product inventory amount, wherein if the final product inventory amount exceeds the desired product production amount, the desired product production amount is accommodated using the final product inventory, otherwise;
b2: means for selecting a production step type which has the product procurement period not exceeding the desired time of delivery of the products for which the final product inventory is exceeded, wherein, when a plurality of step types are selected as the production step type, the production step type having longer product procurement period is selected; and
b3: means for allocating the desired product production amount to the selected production step type, wherein in cases where the desired product production amount exceeds the supply setting amount in the allocation, the allocated production step type is reallocated to the other selected production step type having longer product procurement period.

**15.** The production plan creation system according to claim 14, wherein said computation device has:

a device for evaluating the corresponding expectation value evaluation points for all step production combinations where each of said production step types is set as a production step combination of one or more production steps when the production steps are arranged in series so as to produce the final products;
a device for evaluating request value evaluation points of customers required for producing the final products;
a device for comparing the expectation value evaluation points with the request value evaluation points; and
a device for choosing the optimal step combination as a production step combination j among said step production combinations satisfying the following relation defined by the expression {(expectation value evaluation points of the production step combination j) $\leq$ (request value evaluation points) < (expectation value evaluation points of the production step combination (j + 1) with the smallest expectation value evaluation points among the production step combinations having larger expectation value evaluation points than the expectation value evaluation points of the production step combination j)}, wherein, when the desired product production amount exceeds the supply capacity setting amount and/or when a desired time of delivery exceeds the product procurement period, another production step combination of a plurality of production steps which satisfies the desired product production amount and the desired time of delivery is selected; and said database has the database for storing the desired time of delivery and desired product production amount of the delivery recipient, supply capacity setting amounts and product procurement periods for each of the plurality of production step types, and said expectation value evaluation points and said request value evaluation points for the prescribed production plan period.

**16.** The production plan creation system according to claim 14, wherein, for the production plans of said secondary periods, said computation device is adapted to classify product demand fluctuations which may occur within the production plan period into demand amounts which can be probabilistically predicted, i.e. probabilistically estimated product demand amounts, and demand fluctuation amounts which cannot be predicted probabilistically, i.e. non-probabilistically predicted product demand amount amounts, predicts the probabilistically estimated product demand amounts, throughout said primary period, as a function of the procurement period; and sets the supply capacity setting amount using the equation

supply capacity setting amount = probabilistically

estimated product demand amount + non-probabilistically

predicted product demand amount.

**17.** The production plan creation system according to claim 14, wherein said computation device is adapted to create a product shipment schedule from product warehousing information and from said allocated production step types, and has a storage means for storing said product warehousing information and product shipment schedules created by said computation device.

**18.** The production plan creation system according to claim 14, in which at least one of the production steps are processed via a plurality of steps based on orders, further comprising:

a storage means for storing data of the available production space and the corresponding production period for at least one step among said plurality of steps, bottleneck steps for processing said plurality of steps, an overall processing period for processing said plurality of steps, processing periods for the corresponding bottleneck steps, and processing periods subsequent to the corresponding bottleneck steps, as well as a control program, wherein the bottlenecks step is defined as a step having a production rate lower than that of the immediately preceding step; and

a control means for executing the following step c1 and c2 according to said control program based on said available production space data and production period data, and on said order-related data, each time when data relating to said orders is inputted:

a step c1, when the order is received, based on said stored data, allocating the available production space and production period to the steps having a bottleneck step for processing the order such that the end of the bottleneck step occur latest within the range in which the time of delivery of the order is satisfied, wherein, when the steps for processing for the order have a plurality of bottleneck steps, the production space and production period are allocated for said all bottleneck steps such that the end of the next bottleneck step is latest within the range satisfying the time of delivery for the order; and

a step c2 in which a production plan is created for the order based on the allocation of the production space and the production periods in the above step c1.

**19.** The production plan creation system according to claim 18, wherein, if during processing to allocate production space and a production period for said bottleneck step, there occurs a situation in which allocation is not possible within the range which satisfies the time of delivery of said order, then with respect to allocation of production space and a production period for a bottleneck step preceding the bottleneck step for which this situation has arisen, when there is a separate bottleneck step which is within the range in which the time of delivery of said order is not satisfied and which follows the bottleneck step for allocation as seen in the allocation processing order of claim 18, said control means is adapted to perform processing to allocate production space and a production period such that the end of the bottlenecks step occurs earliest within the range which satisfies the production period is performed, in the order opposite the allocation processing order of claim 18.

**20.** The production plan creation system according to claim 19, wherein said storage means has stored a setting program which sets the available production space and production period data for said one or more steps; said control means is adapted to take the prescribed production plan period to be a primary period, and to divide the primary period into a plurality of secondary periods, according to said setting program; and is adapted to execute the setting of said available production space and production period data for the primary period, and to update the set production space and production period data at each secondary period.

## Revendications

**1.** Procédé destiné à la fabrication de produits identiques livrés à un ou plusieurs destinataires des livraisons avec des délais de livraisons souhaités et des quantités souhaitées de fabrication des produits de manière à livrer la quantité souhaitée des produits aux destinataires des livraisons dans les délais souhaités, dans lequel les produits identiques sont fabriqués comme des produits finaux en utilisant un inventaire de matière première de départ ou un inventaire de matière première intermédiaire / un inventaire des produits intermédiaires via plusieurs étapes des fabrications, **caractérisé en ce que** la fabrication des produits comprend les étapes consistant à :

régler plusieurs types d'étapes de fabrication en classifiant lesdites étapes de fabrication dans lesdits multiples types d'étapes de fabrication avec différentes périodes d'approvisionnement afin qu'au moins un desdits types d'étapes de fabrication classifiées produise lesdits produits identiques comme les produits finaux fabriqués à partir de l'inventaire de matière première de départ ou l'inventaire de matière première intermédiaire / l'inventaire des produits intermédiaires, tout comme une période prescrite de plan de fabrication ;

mémoriser des données dans une base de données pour la période prescrite du plan de fabrication, dans laquelle les données comprennent lesdits délais de livraison souhaités et lesdites quantités correspondantes souhaitées de fabrication des produits pour un destinataire des livraisons, et les niveaux du réglage de la capacité de fourniture et les périodes d'approvisionnement des produits pour chacun des multiples types d'étapes de fabrication ; et

avant le début de la période du plan de fabrication, pour chacune des quantités souhaitées de fabrication des produits, les étapes suivantes a1 - a3 sont respectivement exécutées à partir de celle ayant le délai de livraison souhaité le plus court :

> a1 : étape consistant à comparer la quantité souhaitée de fabrication des produits avec la quantité d'inventaire des produits finaux, dans laquelle si la quantité d'inventaire des produits finaux dépasse la quantité souhaitée de fabrication des produits, la quantité souhaitée de fabrication des produits est fournie en utilisant l'inventaire des produits finaux, autrement ;
>
> a2 : étape consistant à sélectionner un type d'étape de fabrication qui a la période d'approvisionnent des produits ne dépassant pas le délai de livraison souhaité des produits pour lesquels l'inventaire des produits finaux est dépassé, dans laquelle, lorsque plusieurs types d'étapes sont sélectionnés comme type d'étapes de fabrication, le type d'étape de fabrication ayant une période d'approvisionnement plus longue est sélectionné ; et
>
> a3 : étape consistant à attribuer la quantité souhaitée de fabrication des produits au type sélectionné d'étape de fabrication, dans laquelle dans les cas où la quantité souhaitée de fabrication des produits dépasse le niveau du réglage de la capacité de fourniture dans l'attribution, le type attribué d'étape de fabrication est ré-attribué à l'autre type sélectionné d'étape de fabrication ayant une plus logue période d'approvisionnement des produits.

2. Procédé de fabrication selon la revendication 1, comprenant en outre les étapes consistant à :

> régler chacun desdits types d'étapes de fabrication comme une combinaison d'étapes de fabrication d'une ou plusieurs étapes de fabrication lorsque les étapes de fabrication sont organisées en série de manière à fabriquer les produits finaux ;
>
> pour toutes les combinaisons de fabrication par étapes, évaluer les points correspondants d'évaluation de la valeur de la prévision, et évaluer en outre des points d'évaluation de la valeur de la demande des clients nécessaires pour la fabrication des produits finaux ;
>
> pour la période prescrite du plan de fabrication, mémoriser le délai de livraison souhaité et la quantité souhaitée de fabrication des produits du destinataire des livraisons, les niveaux du réglage de la capacité de fourniture et les périodes d'approvisionnement des produits pour chacun des multiples types d'étapes de fabrication, et lesdits points d'évaluation de la valeur de la prévision et lesdits points d'évaluation de la valeur de la demande dans la base de données ;
>
> comparer les points d'évaluation de la valeur de la prévision avec les points d'évaluation de la valeur de la demande ; et
>
> choisir la combinaison d'étapes optimale comme une combinaison j de fabrication parmi lesdites combinaisons de fabrication par étapes satisfaisant à la relation suivante définie par l'expression {(points d'évaluation de la valeur de la prévision de la combinaison j d'étapes de fabrication) $\leq$ (points d'évaluation de la valeur de la demande) < (points d'évaluation de la valeur de la prévision de la combinaison (j+1) d'étapes de fabrication avec les points d'évaluation de la valeur de la prévision la plus petite parmi les combinaisons d'étapes de fabrication ayant des points d'évaluation d'une valeur de prévision plus grande que les points d'évaluation de la valeur de la prévision de la combinaison j d'étapes de fabrication)},

> dans lequel, lorsque la quantité souhaitée de fabrication des produits dépasse le niveau du réglage de la capacité de fourniture et/ou le délai de livraison souhaité dépasse la période d'approvisionnement des produits, une autre combinaison d'étapes de fabrication est sélectionnée parmi plusieurs étapes de fabrication qui satisfait à la quantité souhaitée de fabrication des produits et au délai de livraison souhaité.

3. Procédé de fabrication selon la revendication 1, dans lequel la quantité de fabrication est réglée de manière à maintenir ledit niveau du réglage de la capacité de fourniture à la fin de ladite période prescrite du plan de fabrication.

4. Procédé de fabrication selon la revendication 1, dans lequel ladite période prescrite du plan de fabrication est prise pour être une période primaire, et la période primaire est divisée en plusieurs périodes secondaires, et chacune de ces périodes est considérée comme une période de plan de fabrication.

**5.** Procédé de fabrication selon la revendication 4, dans lequel, pour des plans de fabrication pour lesdites périodes secondaires, ledit niveau du réglage de la capacité de fourniture est réglé en utilisant l'équation suivante :

niveau du réglage de la capacité de fourniture =

niveau de la demande des produits estimée selon les

probabilités + niveau de la demande des produits prédite

sans les probabilités,

dans lequel le niveau de la demande des produits estimée selon les probabilités est le niveau de la demande des produits calculée selon les probabilités comme une fonction de la période d'approvisionnement couvrant ladite période primaire, et le niveau de la demande des produits prédite sans les probabilités est une quantité réglée arbitrairement sans utiliser d'estimations pour correspondre aux fluctuations de la demande qui ne peuvent pas être estimées selon les probabilités, et peut être négative.

**6.** Procédé de fabrication selon la revendication 1, dans lequel ledit niveau du réglage de la capacité de fourniture est réglé selon les tendances des clients demandant les produits finaux.

**7.** Procédé de fabrication selon la revendication 5, dans lequel le niveau de la demande des produits prédite sans les probabilité est réglé selon les tendances des clients demandant les produits finaux.

**8.** Procédé de fabrication selon la revendication 4, dans lequel ladite période primaire est plus logue que la période d'approvisionnement la plus courte parmi les multiples types d'étapes de fabrication, et lesdites périodes secondaires sont des périodes dans lesquelles les tendances du marché pour les produits peuvent être saisies.

**9.** Procédé de fabrication selon la revendication 1, dans lequel au moins une des étapes de fabrication est traitée via plusieurs étapes basées sur des commandes, comprenant en outre les étapes consistant à :

mémoriser des données comprenant au moins les données d'étapes d'étranglement pour le traitement desdites multiples étapes, et une période de traitement générale destinée à traiter lesdites multiples étapes, des périodes de traitement pour les étapes d'étranglement correspondantes, et des périodes de traitement à la suite des étapes d'étranglement correspondantes, dans lequel l'étape d'étranglement est définie comme une étape ayant une vitesse de fabrication plus basse que celle de l'étape précédant immédiatement ;
déterminer les espaces disponibles de traitement de la fabrication, c.-à-d. les espaces disponibles de fabrication, et les périodes de traitement de la fabrication, c.-à-d. les périodes disponibles de la fabrication, à l'avance pour lesdites multiples étapes ;
lorsque la commande est reçue, sur base des données mémorisées dans la base de données, attribuer l'espace disponible de fabrication et la période de fabrication aux étapes ayant une étape d'étranglement pour le traitement de la commande de sorte que la fin de l'étape d'étranglement se produise au plus tard dans la plage dans laquelle le délai de livraison de la commande est satisfait, dans lequel, lorsque les étapes destinées au traitement pour la commande ont plusieurs étapes d'étranglement, l'espace de fabrication et la période de fabrication sont attribués pour toutes lesdites étapes d'étranglement de sorte que la fin de l'étape d'étranglement suivante se situe au plus tard dans la plage satisfaisant au délai de livraison pour la commande ; et
créer un plan de fabrication de manière à fabriquer les produits commandés sur base de l'attribution de l'espace de fabrication et des périodes de fabrication.

**10.** Procédé de fabrication selon la revendication 9, dans lequel, si pendant le traitement pour attribuer un espace de fabrication et une période de fabrication pour ladite étape d'étranglement, il se produit une situation dans laquelle l'attribution n'est pas possible dans la plage qui satisfait au délai de livraison de ladite commande, alors, en ce qui concerne l'attribution d'un espace de fabrication et d'une période de fabrication pour une étape d'étranglement précédant l'étape d'étranglement pour laquelle cette situation s'est présentée, lorsqu'il y a une étape d'étranglement séparée qui se situe dans la plage dans laquelle le délai de livraison de ladite commande n'est pas satisfait et qui suit l'étape d'étranglement pour l'attribution comme vu dans l'ordre de traitement de l'attribution de la revendication 9, un traitement est effectué pour attribuer un espace de fabrication et une période de fabrication de sorte que la fin de l'étape d'étranglement se produise au plus tôt dans la plage qui satisfait la période de fabrication, dans l'ordre opposé à l'ordre de traitement de l'attribution de la revendication 9.

11. Procédé de fabrication selon la revendication 9, dans lequel la période prescrite du plan de fabrication est prise pour être une période primaire, et la période primaire est divisée en plusieurs périodes secondaires, et ladite première étape est exécutée pour la période primaire ; et, en ayant une autre étape dans laquelle l'espace de fabrication et la période de fabrication disponibles déterminés dans ladite première étape sont mis à jour dans chacune desdites périodes secondaires.

12. Procédé de fabrication selon la revendication 9, dans lequel ledit produit est un produit à fibres.

13. Procédé de fabrication selon la revendication 9, dans lequel, lorsqu'il existe une division de réception des commandes qui reçoit ladite commande et une usine de fabrication qui exécute ladite fabrication selon des instructions venant de ladite division de réception des commandes, au moins ladite seconde étape est exécutée par ladite division de réception des commandes.

14. Système de création de plans de fabrication destiné à la fabrication de produits identiques livrés à un ou plusieurs destinataires des livraisons avec des délais de livraisons souhaités et des quantités souhaitées de fabrication des produits de manière à livrer la quantité souhaitée des produits aux destinataires des livraisons dans les délais souhaités, dans lequel les produits identiques sont fabriqués comme des produits finaux à partir d'une matière première de départ ou une matière première intermédiaire par plusieurs types d'étapes de fabrication dans lesquelles se classent plusieurs étapes de fabrication, **caractérisé en ce que** le système comprend :

une base de données destinée à mémoriser des données comprenant lesdits multiples types d'étapes de fabrication avec des périodes d'approvisionnement différentes pour produire les produits identiques, les niveaux du réglage de la capacité de fourniture et les périodes d'approvisionnement des produits pour chacun desdits multiples types d'étapes de fabrication, et les délais de livraison souhaités et les quantités souhaitées de fabrication des produits pour un destinataire des livraisons pour une période prescrite du plan de fabrication ; et

un dispositif de calcul qui comprend un moyen pour effectuer les étapes b1 - b3 à partir de celle ayant le délai de livraison souhaité le plus court, avant le début de la période du plan de fabrication, respectivement pour chacune des quantités souhaitées de fabrication des produits, à savoir :

b1 : un moyen destiné à comparer la quantité souhaitée de fabrication des produits avec la quantité de l'inventaire des produits finaux, dans lequel si la quantité d'inventaire des produits finaux dépasse la quantité souhaitée de fabrication des produits, la quantité souhaitée de fabrication des produits est fournie en utilisant l'inventaire des produits finaux, autrement ;

b2 : un moyen destiné à sélectionner un type d'étape de fabrication qui a la période d'approvisionnent des produits ne dépassant pas le délai de livraison souhaité des produits pour lesquels l'inventaire des produits finaux est dépassé, dans lequel, lorsque plusieurs types d'étapes sont sélectionnées comme type d'étapes de fabrication, le type d'étape de fabrication ayant une période d'approvisionnement plus longue des produits est sélectionné ; et

b3 : un moyen destiné à attribuer la quantité souhaitée de fabrication des produits au type sélectionné d'étape de fabrication, dans lequel dans les cas où la quantité souhaitée de fabrication des produits dépasse le niveau du réglage de la capacité de fourniture dans l'attribution, le type attribué d'étape de fabrication est ré-attribué à l'autre type sélectionné d'étape de fabrication ayant une plus longue période d'approvisionnement des produits.

15. Système de création de plans de fabrication selon la revendication 14, dans lequel ledit dispositif de calcul possède :

un dispositif destiné à évaluer les points d'évaluation de la valeur de prévision correspondante pour toutes les combinaisons de fabrication par étapes où chacun desdits types d'étapes de fabrication est réglé comme une combinaison d'étapes de fabrication d'une ou plusieurs étapes de fabrication lorsque les étapes de fabrication sont organisées en série de manière à fabriquer les produits finaux ;

un dispositif destiné à évaluer des points d'évaluation de la valeur de la demande des clients nécessaire pour la fabrication des produits finaux ;

un dispositif destiné à comparer les points d'évaluation de la valeur de la prévision avec les points d'évaluation de la valeur de la demande ; et

un dispositif destiné à choisir la combinaison d'étapes optimale comme une combinaison j d'étapes de fabrication parmi lesdites combinaisons de fabrication par étapes satisfaisant à la relation suivante définie par l'expression {(points d'évaluation de la valeur de la prévision de la combinaison j d'étapes de fabrication) ≤ (points d'évaluation de la valeur de la demande) < (points d'évaluation de la valeur de la prévision de la combinaison (j+1) d'étapes de fabrication avec les points d'évaluation de la valeur de la prévision la plus petite parmi les combinaisons d'étapes de fabrication ayant des points d'évaluation d'une valeur de prévision plus grande que les points d'évaluation de la valeur de la prévision de la combinaison j d'étapes de fabrication)}, dans lequel, lorsque la quantité souhaitée de fabrication des produits dépasse le niveau du réglage de la capacité de fourniture et/ou lorsqu'un délai de livraison souhaité dépasse la période d'approvisionnement des produits, une autre combinaison d'étapes de fabrication est sélectionnée parmi plusieurs étapes de fabrication qui satisfait à la quantité souhaitée de fabrication des produits et au délai de livraison souhaité ; et ladite base de données possède la base de données destinée à mémoriser le délai de livraison souhaité et la quantité souhaitée de fabrication des produits du destinataire des livraisons, les niveaux du réglage de la capacité de fourniture et les périodes d'approvisionnement des produits pour chacun des multiples types d'étapes de fabrication, et lesdits points d'évaluation de la valeur de la prévision et lesdits points d'évaluation de la valeur de la demande pour la période prescrite du plan de fabrication.

16. Système de création de plans de fabrication selon la revendication 14, dans lequel, pour les plans de fabrication desdites périodes secondaires, ledit dispositif de calcul est adapté pour classifier des fluctuations de la demande des produits qui peuvent se produire pendant la période du plan de fabrication dans les niveaux de la demande qui peuvent être prédits selon les probabilités, c.-à-d. les niveaux de la demande des produits estimés selon les probabilités, et les valeurs de fluctuation de la demande qui ne peuvent pas être prédites selon les probabilités, c.-à-d. les niveaux du volume de la demande des produits prédits sans les probabilités ; prédit les niveaux de la demande des produits estimés selon les probabilités, tout au long de ladite période primaire, comme une fonction de la période d'approvisionnement ; et règle le niveau du réglage de la capacité de fourniture en utilisant l'équation

niveau du réglage de la capacité de fourniture =

niveau de la demande de produits estimée selon les

probabilités + niveau de la demande des produits prédite

sans les probabilités.

17. Système de création de plans de fabrication selon la revendication 14, dans lequel ledit dispositif de calcul est adapté pour créer un calendrier d'expédition des produits à partir de l'information d'entreposage des produits et à partir desdits types d'étapes de fabrication attribués, et dispose d'un moyen de mémorisation destiné à mémoriser ladite information d'entreposage des produits et les calendriers d'expédition des produits créés par ledit dispositif de calcul.

18. Système de création de plans de fabrication selon la revendication 14, dans lequel au moins une des étapes de fabrication est traitée via plusieurs étapes basées sur des commandes, comprenant en outre :

un moyen de mémorisation destiné à mémoriser des données de l'espace de fabrication disponible et la période de fabrication correspondante pour au moins une étape parmi lesdites multiples étapes, des étapes d'étranglement pour le traitement desdites multiples étapes, une période générale de traitement destinée au traitement desdites multiples étapes, des périodes de traitement pour les étapes d'étranglement correspondantes, et des périodes de traitement à la suite des étapes d'étranglement correspondantes, tout comme un programme de contrôle, dans lequel l'étape d'étranglement est définie comme une étape ayant une vitesse de fabrication plus basse que celle de l'étape précédant immédiatement ; et

un moyen de contrôle destiné à exécuter l'étape suivante c1 et c2 selon ledit programme de contrôle sur base desdites données de l'espace de fabrication disponible et données de la période de fabrication, et sur lesdites données relatives à la commande, chaque fois lorsque sont introduites des données relative aux dites commandes :

une étape c1, lorsque la commande est reçue, sur base desdites données mémorisées, consistant à attribuer l'espace de fabrication disponible et la période de fabrication aux étapes ayant une étape d'étranglement pour le traitement de la commande de sorte que la fin de l'étape d'étranglement se produise au plus tard dans la plage dans laquelle le délai de livraison de la commande est satisfait, dans laquelle, lorsque les étapes destinées au traitement de la commande ont plusieurs étapes d'étranglement, l'espace de fabrication et la période de fabrication sont attribués pour toutes lesdites étapes d'étranglement de sorte que la fin de l'étape d'étranglement suivante se situe au plus tard dans la plage satisfaisant au délai de livraison pour la commande ; et

une étape c2 dans laquelle est créé un plan de fabrication pour la commande sur base de l'attribution de l'espace de fabrication et des périodes de fabrication dans l'étape c1 ci-dessus.

**19.** Système de création de plans de fabrication selon la revendication 18, dans lequel, si pendant le traitement pour attribuer un espace de fabrication et une période de fabrication pour ladite étape d'étranglement, il se produit une situation dans laquelle une attribution n'est pas possible dans la plage qui satisfait au délai de livraison de ladite commande, alors, en ce qui concerne l'attribution d'un espace de fabrication et d'une période de fabrication pour une étape d'étranglement précédant l'étape d'étranglement pour laquelle cette situation s'est présentée, lorsqu'il y a une étape d'étranglement séparée qui se situe dans la plage dans laquelle le délai de livraison de ladite commande n'est pas satisfait et qui suit l'étape d'étranglement pour l'attribution comme vu dans l'ordre de traitement de l'attribution de la revendication 18, ledit moyen de contrôle est adapté pour effectuer un traitement pour attribuer un espace de fabrication et une période de fabrication de sorte que la fin de l'étape d'étranglement se produise au plus tôt dans la plage qui satisfait la période de fabrication, dans l'ordre opposé à l'ordre de traitement de l'attribution de la revendication 18.

**20.** Système de création de plans de fabrication selon la revendication 19, dans lequel ledit moyen de mémorisation a mémorisé un programme de réglage qui règle les données de l'espace de fabrication et de la période de fabrication disponibles pour la ou lesdites étapes ; ledit moyen de contrôle est adapté pour prendre la période prescrite du plan de fabrication pour être une période primaire, et pour diviser la période primaire en plusieurs périodes secondaires, selon ledit programme de réglage ; et est adapté pour exécuter le réglage desdites données de l'espace de fabrication et de la période de fabrication disponibles pour la période primaire, et pour réactualiser les données réglées de l'espace de fabrication et de la période de fabrication à chaque période secondaire.

## Patentansprüche

**1.** Verfahren zur Herstellung derselben Produkte, die an einen oder mehrere Lieferungsempfänger mit einer gewünschten Lieferzeit und einer gewünschten Produktherstellungsmenge geliefert werden, sodass dem Lieferungsempfänger die gewünschte Menge von Produkten mit den gewünschten Lieferzeiten geliefert wird, wobei dieselben Produkte unter Verwendung eines Anfangs-Rohmaterialinventars oder eines Zwischenrohmaterialinventars/eines Zwischenproduktinventars durch eine Vielzahl von Herstellungsschritten als Endprodukte hergestellt werden, **dadurch gekennzeichnet, dass** die Herstellung der Produkte die folgenden Schritte umfasst:

Festlegen einer Vielzahl von Herstellungsschrittarten durch Klassifizierung der Herstellungsschritte in die Vielzahl von Produktionsschrittarten mit unterschiedlichen Beschaffungszeiträumen, sodass mindestens eine der klassifizierten Herstellungsschrittarten dieselben Produkte als Endprodukte herstellt, die ausgehend von dem Anfangsrohmaterialinventar oder dem Zwischenrohmaterialinventar/dem Zwischenproduktinventar hergestellt werden, sowie eines vorgeschriebenen Herstellungsplanzeitraums;

Speichern von Daten in einer Datenbank für den vorgeschriebenen Herstellungsplanzeitraum, wobei die Daten die erwünschten Lieferzeiten und die entsprechenden erwünschten Produktherstellungsmengen für einen Lieferungsempfänger sowie Versorgungskapazität-Einstellsmengen und Produktbeschaffungszeiträume für jede der Vielzahl von Herstellungsschrittarten beinhalten; und

wobei vor dem Start des Herstellungsplanzeitraums für jede der erwünschten Produktherstellungsmengen die folgenden Schritte a1 bis a3 jeweils ausgehend von jenem mit der kürzesten erwünschten Lieferzeit durchgeführt werden:

a1: Vergleichen der erwünschten Produktherstellungsmenge mit der Endproduktinventarmenge, wobei wenn die Endproduktinventarmenge die erwünschte Produktherstellungsmenge übersteigt, andererseits die gewünschte Produktherstellungsmenge unter Verwendung des Endproduktinventars angepasst wird;

a2: Auswählen einer Herstellungsschrittart, bei der der Produktbeschaffungszeitraum nicht die erwünschte Lieferzeit der Produkte überschreitet, für welche das Endproduktinventar überschritten wird, wobei, wenn eine Vielzahl von Schrittarten als die Herstellungsschrittart ausgewählt werden, die Herstellungsschrittart mit dem längeren Beschaffungszeitraum ausgewählt wird; und

a3: Zuordnen der erwünschten Produktherstellungsmenge zu der ausgewählten Herstellungsschrittart, wobei in Fällen, in welchen die erwünschte Produktherstellungsmenge die Versorgungskapazität-Einstellmenge beim Zuordnen überschreitet, die zugeordnete Herstellungsschrittart der anderen ausgewählten Herstellungsschrittart mit einem längeren Produktbeschaffungszeitraum neu zugeordnet wird.

2. Herstellungsverfahren nach Anspruch 1, weiter die folgenden Schritte umfassend:

Einstellen jeder der Herstellungsschrittarten als Herstellungsschrittkombination einer oder mehrerer Herstellungsschritte, wenn die Herstellungsschritte hintereinander angeordnet sind, um so die Endprodukte herzustellen;

Auswerten für alle Herstellungsschrittkombinationen, der entsprechenden Erwartungswert-Auswertungspunkte und weiteres Auswerten der Anfragewert-Auswertungspunkte der Kunden, die zur Herstellung der Endprodukte nötig sind;

Speichern, für den vorgeschriebenen Herstellungsplanzeitraum, der erwünschten Lieferzeiten und der erwünschten Produktherstellungsmengen des Lieferungsempfängers, der Versorgungskapazität-Einstellmengen und Produktbeschaffungszeiträume für jede der Vielzahl von Herstellungsschrittarten und der Erwartungswert-Auswertungspunkte und der Anfragewert-Auswertungspunkte in der Datenbank;

Vergleichen der Erwartungswertauswertungspunkte mit den Anfragewertauswertungspunkten; und

Auswählen der optimalen Schrittkombination als Herstellungskombination j aus den Herstellungsschrittkombinationen, die die folgende Beziehung erfüllen, definiert durch den Ausdruck {(Erwartungswert-Auswertungspunkte der Herstellungsschrittkombination j) ≤ (Anfragewert-Auswertungspunkte) < (Erwartungswert-Auswertungspunkte der Herstellungsschrittkombination (j+1) mit den kleinsten Erwartungswert-Auswertungspunkten unter den Herstellungsschrittkombinationen mit größeren Erwartungswert-Auswertungspunkten als den Erwartungswert-Auswertungspunkten der Herstellungsschrittkombination j)},

wobei, wenn die erwünschte Produktherstellungsmenge die Versorgungskapazität-Einstellmenge überschreitet und/oder die erwünschte Lieferzeit den Produktbeschaffungszeitraum überschreitet, eine andere Herstellungsschrittkombination einer Vielzahl von Herstellungsschrittkombinationen ausgewählt wird, welche die gewünschte Produktherstellungsmenge und die gewünschte Lieferzeit erfüllt.

3. Herstellungsverfahren nach Anspruch 1, wobei die Herstellungsmenge so eingestellt wird, dass sie die Versorgungskapazität-Einstellmenge am Ende des vorgeschriebenen Herstellungsplanzeitraums beibehält.

4. Herstellungsverfahren nach Anspruch 1, wobei der vorgeschriebene Herstellungsplanzeitraum als primärer Zeitraum genommen wird und der primäre Zeitraum in eine Vielzahl von sekundären Zeiträumen unterteilt wird, und jeder dieser Zeiträume als ein Herstellungsplanzeitraum angesehen wird.

5. Herstellungsverfahren nach Anspruch 4, wobei für Herstellungspläne für die sekundaren Zeiträume die Versorgungskapazität-Einstellmenge unter Verwendung der folgenden Gleichung eingestellt wird:

Versorgungskapazität-Einstellmenge = probabilistisch

geschätzte Produktnachfragemenge + nicht probabilistisch

vorhergesagte Produktnachfragemenge,

wobei die probabilistisch geschätzte Produktnachfragemenge die Produktnachfragemenge ist, die probabilistisch als Funktion des Beschaffungszeitraums über den primären Zeitraum berechnet wird, und die nicht probabilistisch vorhergesagte Produktnachfragemenge eine willkürlich festgelegte Menge ohne Verwendung von Schätzungen ist, um den Nachfragefluktuationen zu entsprechen, welche nicht probabilistisch geschätzt werden können und negativ sein können.

6. Herstellungsverfahren nach Anspruch 1, wobei die Versorgungskapazität-Einstellmenge entsprechend den Neigungen der die Endprodukte erfordernden Kunden eingestellt wird.

7. Herstellungsverfahren nach Anspruch 5, wobei die nicht probabilistisch vorhergesagte Produktnachfragemenge entsprechend den Neigungen der die Endprodukte erfordernden Kunden festgelegt wird.

8. Herstellungsverfahren nach Anspruch 4, wobei der primäre Zeitraum länger als der kürzeste Beschaffungszeitraum aus der Vielzahl der Herstellungsschrittarten ist und die sekundären Zeiträume Zeiträume sind, in welchen Marktendenzen für die Produkte erfasst werden können.

9. Herstellungsverfahren nach Anspruch 1, in welchem mindestens einer der Herstellungsschritte mittels einer Vielzahl von auf Bestellungen basierenden Schritten verarbeitet wird, weiter die folgenden Schritte umfassend:

Speichern von Daten, die mindestens die Daten der Engpassschritte zur Verarbeitung der Vielzahl von Schritten, einen Gesamtverarbeitungszeitraum zur Verarbeitung der Vielzahl von Schritten, Verarbeitungszeiträume für die entsprechenden Engpassschritte und den entsprechenden Engpassschritten nachfolgende Verarbeitungsschritte beinhalten, wobei der Engpassschritt definiert ist als ein Schritt mit einer geringeren Produktionsrate als jener des unmittelbar vorhergehenden Schritts;

Bestimmen im Vorausder verfügbaren Herstellungsverarbeitungsräume, d.h. der verfügbaren Herstellungsräume, und der Herstellungsverarbeitungszeiträume, d.h. der verfügbaren Herstellungszeiträume, für die Vielzahl von Schritten;

Zuordnen, wenn die Bestellung empfangen wird und basierend auf den in der Datenbank gespeicherten Daten, der verfügbaren Herstellungsräume und Herstellungszeiträume zu den Schritten mit einem Engpassschritt, um die Bestellung so zu verarbeiten, dass das Ende des Engpassschritts spätestens innerhalb des Bereichs auftritt, in welchem die Lieferzeit der Bestellung erfüllt ist, wobei, wenn die Schritte zum Verarbeiten der Bestellung eine Vielzahl von Engpassschritten aufweisen, der Herstellungsraum und der Herstellungszeitraum für alle Engpassschritte zugeordnet werden, sodass das Ende des nächsten Engpassschritts spätestens innerhalb des Bereichs liegt, welcher die Lieferzeit der Bestellung erfüllt; und

Erzeugen eines Herstellungsplans, um so die bestellten Produkte auf Grundlage der Zuordnung der Herstellungsräume und Herstellungszeiträume herzustellen.

10. Herstellungsverfahren nach Anspruch 9, wobei, wenn während der Verarbeitung zum Zuordnen der Herstellungsräume und eines Herstellungszeitraums für den Engpassschritt eine Situation auftritt, in welcher die Zuordnung nicht innerhalb des Bereichs möglich ist, der die Lieferzeit der Bestellung erfüllt, dann in Bezug auf die Zuordnung des Herstellungsraums und eines Herstellungszeitraums für einen dem Engpassschritt vorangehenden Engpassschritt, für welchen diese Situation entstanden ist, wenn ein separater Engpassschritt vorhanden ist, welcher innerhalb des Bereichs liegt, in welchem die Lieferzeit der Bestellung nicht erfüllt ist und welcher dem Engpassschritt für die Zuordnung wie in der Zuordnungsverarbeitungsreihenfolge des Anspruchs 9 gesehen, nachfolgt, die Verarbeitung zur Zuordnung des Herstellungsraums und eines Herstellungszeitraums, sodass das Ende des Engpassschritts frühestens innerhalb des Bereichs auftritt, welcher den Herstellungszeitraum erfüllt, durchgeführt wird, in zur Zuordnungsverarbeitungsreihenfolge des Anspruchs 9 entgegengesetzten Reihenfolge.

11. Herstellungsverfahren nach Anspruch 9, wobei der vorgeschriebene Herstellungsplanzeitraum als primärer Zeitraum genommen wird und der primäre Zeitraum eine Vielzahl von sekundären Zeiträumen unterteilt wird, und der erste Schritt für den primären Zeitraum durchgeführt wird; und der einen weiteren Schritt aufweist, in welchem der verfügbare Herstellungsraum und Herstellungszeitraum, die in dem ersten Schritt bestimmt werden, in jedem der sekundären Zeiträume aufgefrischt werden.

12. Herstellungsverfahren nach Anspruch 9, wobei das Produkt ein Faserprodukt ist.

13. Herstellungsverfahren nach Anspruch 9, wobei, wenn eine bestellungsempfangende Abteilung existiert, welche die Bestellung empfängt, und eine Herstellungsfabrik existiert, welche die Herstellung entsprechend den Anweisungen von der bestellungsempfangenden Abteilung durchführt, mindestens der zweite Schritt von der bestellungsempfangenden Abteilung durchgeführt wird.

14. Herstellungsplanerzeugungssystem für die Herstellung derselben Produkte, die einem oder mehreren Lieferungsempfängern mit einer erwünschten Lieferzeit und erwünschten Produktherstellungsmengen geliefert werden, um so dem Lieferungsempfänger die gewünschte Anzahl von Produkten in der gewünschten Zeit zu liefern, wobei dieselben Produkte als Endprodukte ausgehend von einem Anfangsrohmaterial oder einem Zwischenrohmaterial mittels einer Vielzahl von Herstellungsschrittarten hergestellt werden, in welche eine Vielzahl von Herstellungsschritten klassifiziert werden können, **dadurch gekennzeichnet, dass** das System umfasst:

eine Datenbank zum Speichern von Daten, welche die Vielzahl von Herstellungsschrittarten mit verschiedenen Beschaffungszeiträumen zur Herstellung derselben Produkte, die Versorgungskapazitätseinstellmengen und Produktbeschaffungszeiträume für jede der Vielzahl von Herstellungsschrittarten und erwünschte Lieferzeiten und erwünschte Produktherstellungsmengen für einen Lieferungsempfänger für einen vorgeschriebenen Herstellungsplanzeitraum beinhalten; und

eine Rechenvorrichtung, welche Mittel zum Durchführen der Schritte b1 bis b3 ausgehend von jenem mit der kürzesten erwünschten Lieferzeit vor dem Beginn des Herstellungsplanzeitraums, jeweils für jede der erwünschten Produktherstellungsmengen, beinhaltet, nämlich:

b1: Mittel zum Vergleichen der erwünschten Produktherstellungsmengen mit der Endproduktinventarmenge, wobei wenn die Endproduktinventarmenge die erwünschte Produktherstellungsmenge überschreitet, andererseits die erwünschte Produktherstellungsmenge unter Verwendung des Endproduktinventars angepasst wird;

b2: Mittel zum Auswählen einer Produktionsschrittart, welche den Produktbeschaffungszeitraum aufweist, der nicht die erwünschte Lieferzeit der Produkte überschreitet, für welche das Endproduktinventar überschritten wird, wobei, wenn eine Vielzahl von Schritten als Herstellungsschrittart ausgewählt werden, die Herstellungsschrittart mit dem längsten Produktbeschaffungszeitraum ausgewählt wird; und

b3: Mittel zum Zuordnen der erwünschten Produktherstellungsmenge zur gewählten Herstellungsschrittart, wobei in Fällen, in welchen die erwünschte Produktherstellungsmenge die Versorgungseinstellmenge bei der Zuordnung überschreitet, die zugeordnete Herstellungsschrittart der anderen ausgewählten Herstellungsschrittart mit längerem Produktbeschaffungszeitraum neu zugeordnet wird.

15. Herstellungsplanerzeugungssystem nach Anspruch 14, wobei die Rechenvorrichtung aufweist:

eine Vorrichtung zum Auswerten der entsprechenden Erwartungswert-Auswertungspunkte für alle Herstellungsschrittkombinationen, wo jede der Herstellungsschrittarten als eine Herstellungsschrittkombination einer oder mehrerer Herstellungsschritte festgelegt wird, wenn die Herstellungsschritte nacheinander angeordnet werden, um so die Endprodukte herzustellen;

eine Vorrichtung zum Auswerten der Anfragewert-Auswertungspunkte der Kunden, benötigt für die Herstellung der Endprodukte;

eine Vorrichtung zum Vergleichen der Erwartungswert-Auswertungspunkte mit den AnfragewertAuswertungspunkten; und

eine Vorrichtung zum Auswählen der optimalen Schrittkombination als Herstellungsschrittkombination j aus den Herstellungsschrittkombinationen, die die folgende Beziehung erfüllen, definiert durch den Ausdruck {(Erwartungswert-Auswertungspunkte der Herstellungsschrittkombination j) $\leq$ (Anfragewert-Auswertungspunkte) < (Erwartungswert-Auswertungspunkte der Herstellungsschrittkombination (j+1) mit den kleinsten Erwartungswert-Auswertungspunkten aus den Herstellungsschrittkombinationen mit größeren Erwartungswert-Auswertungspunkten als die Erwartungswert-Auswertungspunkte der Herstellungsschrittkombination j)}, wobei, wenn die erwünschte Produktherstellungsmenge die Versorgungskapazität-Einstellmenge überschreitet, und/oder wenn eine erwünschte Lieferzeit den Produktbeschaffungszeitraum überschreitet, eine andere Herstellungsschrittkombination der Vielzahl von Herstellungsschritten, welche die erwünschte Produktherstellungsmenge und die erwünschte Lieferzeit erfüllen, ausgewählt wird, und die Datenbank eine Datenbank aufweist zum Speichern der erwünschten Lieferzeit und der erwünschten Produktherstellungsmenge des Lieferungsempfängers, der Versorgungskapazität-Einstellmengen und Produktbeschaffungszeiträume für jede der Vielzahl von Herstellungsschrittarten, und der Erwartungswert-Auswertungspunkte und Anfragewert-Auswertungspunkte für den vorgeschriebenen Herstellungsplanzeitraum.

16. Herstellungsplanerzeugungssystem nach Anspruch 14, wobei für die Herstellungspläne der sekundären Perioden die Rechenvorrichtung angepasst wird, um Produktnachfragefluktuationen zu klassifizieren, welche innerhalb des Herstellungsplanzeitraums in den Nachfragemengen auftreten können, welche probabilistisch vorhergesagt werden können, d.h. probabilistisch geschätzte Produktnachfragemengen, und Nachfragefluktuationsmengen, welche nicht probabilistisch vorausgesagt werden können, d.h. nicht probabilistisch vorhergesagte Produktnachfragemengen; wobei die Rechenvorrichtung die probabilistisch geschätzten Produktnachfragemengen über dem primären Zeitraum als Funktion des Beschaffungszeitraums vorhersagt; und die Versorgungskapazität-Einstellmenge unter Verwendung der Gleichung

Versorgungskapazität-Einstellmenge = probabilistisch

geschätzte Produktnachfragemenge + nicht probabilistisch

vorhergesagte Produktnachfragemenge

einstellt.

17. Herstellungsplanerzeugungssystem nach Anspruch 14, wobei die Rechenvorrichtung angepasst wird, um einen Produktversendungszeitplan aus Produktlagerinformationen und aus den zugeordneten Herstellungsschrittarten erzeugt und eine Speichervorrichtung zum Speichern der Produktlagerinformationen und der von der Rechenvorrichtung erzeugten Produktversendungszeitpläne aufweist.

18. Herstellungsplanerzeugungssystem nach Anspruch 14, in welchem mindestens einer der Herstellungsschritte mittels einer Vielzahl von auf Bestellungen basierenden Schritte verarbeitet wird, weiter umfassend:

eine Speichervorrichtung zum Speichern von Daten der verfügbaren Herstellungsräume und der entsprechenden Herstellungszeiträume für mindestens einen Schritt aus der Vielzahl von Schritten, der Engpassschritte zur Verarbeitung der Vielzahl von Schritten, eines Gesamtverarbeitungszeitraums zur Verarbeitung der Vielzahl von Schritte, von Verarbeitungszeiträumen für die entsprechenden Engpassschritte, und von Verarbeitungszeiträumen, die den entsprechenden Engpassschritten nachfolgen, sowie eines Kontrollprogramms, wobei der Engpassschritt als Schritt definiert ist, welcher eine geringere Produktionsrate als jene des unmittelbar vorhergehenden Schritts aufweist; und

eine Kontrollvorrichtung zur Ausführung der folgenden Schritte c1 und c2 entsprechend dem Kontrollprogramm basierend auf den Daten der verfügbaren Herstellungsräume und den Daten der Herstellungszeiträume, und auf den bestellungsbezogenen Daten, jedes Mal wenn auf die Bestellungen bezogene Daten eingegeben werden:

ein Schritt c1, wenn die Bestellung empfangen wird, welcher basierend auf den gespeicherten Daten den verfügbaren Herstellungsraum und Herstellungszeitraum den Schritten mit einem Engpassschritt zum Verarbeiten der Bestellung zuordnet, sodass das Ende des Engpassschritts spätestens innerhalb des Bereichs auftritt, in welchem die Lieferzeit der Bestellung erfüllt ist, wobei, wenn die Schritte zur Verarbeitung der Bestellung eine Vielzahl von Engpassschritten aufweisen, der Herstellungsraum und der Herstellungszeitraum für alle Engpassschritte zugeordnet werden, sodass das Ende des nächsten Engpassschritts spätestens innerhalb des Bereichs auftritt, in welchem die Lieferzeit für die Bestellung erfüllt wird; und

ein Schritt c2, in welchem ein Herstellungsplan für die Bestellung erzeugt wird, basierend auf der Zuordnung des Herstellungsraums und der Herstellungszeiträume in dem oben genannten Schritt c1.

**19.** Herstellungsplanerzeugungssystem nach Anspruch 18, wobei, wenn während der Verarbeitung zur Zuordnung von Herstellungsraum und eines Herstellungszeitraums für den Engpassschritt eine Situation auftritt, der die Zuordnung innerhalb des Bereichs, in welcher die Lieferzeit der Bestellung erfüllt, nicht möglich ist, dann in Bezug auf die Zuordnung des Herstellungsraums und eines Herstellungszeitraums für einen dem Engpassschritt vorangehenden Engpassschritt, für welchen die Situation entstanden ist, wenn es einen separaten Engpassschritt gibt, welcher innerhalb des Bereichs liegt, in welchem die Lieferzeit für die Bestellung nicht erfüllt ist und welcher dem Engpassschritt für die Zuordnung wie aus der Zuordnungsverarbeitungsreihenfolge des Anspruchs 18 gesehen nachfolgt, die Kontrollvorrichtung angepasst wird, um eine Verarbeitung durchzuführen, um Herstellungsraum und einen Herstellungszeitraum zuzuordnen, sodass das Ende der Engpassschritte frühestens innerhalb des Bereichs auftritt, welcher den Herstellungszeitraum erfüllt, durchgeführt wird, in der zur Zuordnungsverarbeitungsreihenfolge des Anspruchs 18 entgegengesetzten Reihenfolge.

**20.** Herstellungsplanerzeugungssystem nach Anspruch 19, wobei in der Speichervorrichtung ein Einstellprogramm gespeichert ist, welches die Daten über den verfügbaren Herstellungsraum und den Herstellungszeitraum für einen oder mehrere Schritte einstellt; die Kontrollvorrichtung angepasst wird, um den vorgeschriebenen Herstellungsplanzeitraum als primären Zeitraum zu nehmen und den primären Zeitraum in eine Vielzahl von sekundären Zeiträumen zu unterteilen, entsprechend dem-Einstellungsprogramm; und angepasst wird, um die Einstellung der Daten über den verfügbaren Herstellungsraum und Herstellungszeitraum für die primäre Periode durchzuführen und die eingestellten Daten über den Herstellungsraum und Herstellungszeitraum bei jedem sekundären Zeitraum aufzufrischen.

EP 1 310 845 B1

# FIG. 1

58

**FIG. 2**

START

↓

SET PLURALITY OF PRODUCTION STEP TYPES WITH DIFFERENT PROCUREMENT PERIODS — S1

↓

SET RAW MATERIAL INVENTORY SETTING AMOUNTS FOR RESPECTIVE PRODUCTION STEP TYPES — S2

↓

COMPARE DESIRED PRODUCT PRODUCTION AMOUNT AND FINAL PRODUCT INVENTORY AMOUNT — S3

Y →

S4 — ACCOMMODATE DESIRED PRODUCTION AMOUNT FROM FINAL PRODUCT INVENTORY AMOUNT

N ↓

SELECT PRODUCTION STEP TYPES FOR PRODUCT THE AMOUNT OF WHICH EXCEEDS FINAL PRODUCT INVENTORY AMOUNT, SUCH THAT DESIRED TIME OF DELIVERY FOR THE PRODUCT IS NOT EXCEEDED — S5

↓

PRODUCT PROCUREMENT PERIOD OF SELECTED PRODUCTION STEP TYPE $\leq$ DESIRED TIME OF DELIVERY AND RAW MATERIAL INVENTORY SETTING AMOUNT OF SELECTED PRODUCTION STEP TYPE $\geq$ DESIRED PRODUCT PRODUCTION AMOUNT EXCEEDING PRODUCT INVENTORY AMOUNT — S6

Y ↓         N →

S7 — PRODUCTION USING SELECTED PRODUCTION STEP TYPES

S8 — ORDER CANNOT BE RECEIVED

# FIG. 3

INVENTORY     INVENTORY

STARTING RAW MATERIALS → [RAW YARN STEP] RAW YARN → [YARN TWISTING STEP] TWISTED YARN

## FIG. 3A
PRODUCTION STEP TYPE A

INVENTORY     INVENTORY

[WEAVING /KNITTING STEP] GRAY YARNS → [DYEING/ FINISHING STEP] FABRIC PRODUCT

## FIG. 3B
PRODUCTION STEP TYPE B

INVENTORY    INVENTORY    INVENTORY    INVENTORY

RAW YARN → [YARN TWISTING STEP] TWISTED YARN → [WEAVING /KNITTING STEP] GRAY YARNS → [DYEING/ FINISHING STEP] FABRIC PRODUCT

## FIG. 3C
PRODUCTION STEP TYPE C

INVENTORY    INVENTORY    INVENTORY

TWISTED YARN → [WEAVING /KNITTING STEP] GRAY YARNS → [DYEING/ FINISHING STEP] FABRIC PRODUCT

## FIG. 3D
PRODUCTION STEP TYPE D

INVENTORY    INVENTORY

GRAY YARNS → [DYEING/ FINISHING STEP] FABRIC PRODUCT

EP 1 310 845 B1

# FIG. 4

61

# FIG. 5

START

SET ONE OR MORE PRODUCTION
STEP COMBINATIONS WITH
DIFFERENT PROCUREMENT
PERIODS — S101

PERFORM EXPECTATION VALUE
EVALUATION FOR PRODUCTION
STEP COMBINATION j — S102

PERFORM
EXPECTATION VALUE
EVALUATION FOR ALL
PRODUCTION STEP
COMBINATIONS — S102-1

PERFORM REQUEST VALUE
EVALUATION FOR REQUEST
IDENTIFICATION NUMBER j — S103

PERFORM
REQUEST VALUE
EVALUATION FOR ALL
REQUEST IDENTIFICATION
NUMBERS — S103-1

SELECT PRODUCTION STEP COMBINATION j SATISFYING
(EXPECTATION VALUE EVALUATION POINTS OF PRODUCTION
STEP COMBINATION j) ≦ (REQUEST VALUE EVALUATION
POINTS) < (EXPECTATION VALUE EVALUATION POINTS OF (j+1)
WITH THE SMALLEST EXPECTATION VALUE EVALUATION POINTS
AMONG PRODUCTION STEP COMBINATIONS HAVING LARGER
EXPECTATION VALUE EVALUATION POINTS THAN THE
EXPECTATION VALUE EVALUATION POINTS OF PRODUCTION
STEP COMBINATION j) — S104

PRODUCTION PLAN,
STARTING RAW
MATERIAL
REPLENISHMENT PLAN — S105

# FIG. 6

INVENTORY | INVENTORY

A — RAW YARN STEP

STARTING RAW MATERIALS → [RAW YARN STEP] → RAW YARN → [YARN TWISTING STEP] → TWISTED YARN

B — YARN TWISTING STEP

## FIG. 6A
### PRODUCTION STEP TYPE ①

INVENTORY | INVENTORY

C — WEAVING /KNITTING STEP

[WEAVING /KNITTING STEP] → GRAY YARNS → [DYEING/ FINISHING STEP] → FABRIC PRODUCT

D — DYEING/ FINISHING STEP

## FIG. 6B
### PRODUCTION STEP TYPE ②

INVENTORY | INVENTORY | INVENTORY | INVENTORY

RAW YARN → [YARN TWISTING STEP] → TWISTED YARN → [WEAVING /KNITTING STEP] → GRAY YARNS → [DYEING/ FINISHING STEP] → FABRIC PRODUCT

B — YARN TWISTING STEP
C — WEAVING /KNITTING STEP
D — DYEING/ FINISHING STEP

## FIG. 6C
### PRODUCTION STEP TYPE ③

INVENTORY | INVENTORY | INVENTORY

TWISTED YARN → [WEAVING /KNITTING STEP] → GRAY YARNS → [DYEING/ FINISHING STEP] → FABRIC PRODUCT

C — WEAVING /KNITTING STEP
D — DYEING/ FINISHING STEP

## FIG. 6D
### PRODUCTION STEP TYPE ④

INVENTORY | INVENTORY

GRAY YARNS → [DYEING/ FINISHING STEP] → FABRIC PRODUCT

D — DYEING/ FINISHING STEP

## FIG. 7

START

SET ONE OR MORE PRODUCTION STEP COMBINATIONS WITH DIFFERENT PROCUREMENT PERIODS — S101

PERFORM EXPECTATION VALUE EVALUATION FOR PRODUCTION STEP COMBINATION j — S102

PERFORM EXPECTATION VALUE EVALUATION FOR ALL PRODUCTION STEP COMBINATIONS — S102—1

PERFORM REQUEST VALUE EVALUATION — S103

PERFORM REQUEST VALUE EVALUATION FOR ALL REQUEST IDENTIFICATION NUMBERS — S103—1

SELECT PRODUCTION STEP COMBINATION j SATISFYING (EXPECTATION VALUE EVALUATION POINTS OF PRODUCTION STEP COMBINATION j) ≦ (REQUEST VALUE EVALUATION POINTS) < (EXPECTATION VALUE EVALUATION POINTS OF (j+1) WITH THE SMALLEST EXPECTATION VALUE EVALUATION POINTS AMONG PRODUCTION STEP COMBINATIONS HAVING LARGER EXPECTATION VALUE EVALUATION POINTS THAN THE EXPECTATION VALUE EVALUATION POINTS OF PRODUCTION STEP COMBINATION j) — S104

CAN DEMAND ALLOCATED TO PRODUCTION STEP COMBINATION j BE ACCOMMODATED FROM RAW MATERIAL INVENTORY SETTING AMOUNT OR PRODUCT INVENTORY? — S150

NO··

YES

S151
PRODUCTION PLAN FOR SELECTED PRODUCTION STEP COMBINATION j

S152
SELECT PRODUCTION STEP COMBINATION (j−1) CLOSEST TO EXPECTATION VALUE EVALUATION POINTS OF PRODUCTION STEP COMBINATION j, AND WITH EXPECTATION VALUE EVALUATION POINTS LOWER THAN EXPECTATION VALUE EVALUATION POINTS OF PRODUCTION STEP COMBINATION j

END PRODUCTION PLAN FOR ALL COMBINATIONS — S153

END

# FIG. 8

EP 1 310 845 B1

# FIG. 9

| PART NUMBER | DYEING PLANT | BOTTLENECK STEP | OVERALL PROCESSING PERIOD (a) | BOTTLENECK PROCESSING PERIOD (b) | PROCESSING PERIOD AFTER BOTTLENECK STEP (c) |
|---|---|---|---|---|---|
| 100 | a | A | 10 | 1 | 5 |
| 101 | a | A | 15 | 2 | 7 |
| 200 | a | B | 12 | 1 | 11 |
| 300 | a | C | 10 | 1 | 2 |
| 301 | a | C | 15 | 2 | 3 |
| . | . | . | . | . | . |
| . | . | . | . | . | . |
| . | . | . | . | . | . |

# FIG. 10

DYEING PLANT a → DATE

STEP TYPE

| | July 1 | 2 | 3 | 4 | 5 | 6 | 7 | 8 | 9 | . | . | . | 30 | 31 | Aug. 1 | . |
|---|---|---|---|---|---|---|---|---|---|---|---|---|---|---|---|---|

A
B
C

▨ : UNAVAILABLE

☐ : AVAILABLE(CAN BE ALLOCATED)

■ : ALREADY ALLOCATED

66

# FIG. 11

S401
INPUT PRODUCTION (PROCESSING) SPACE DATA

S402
SET PRODUCTION (PROCESSING) SPACE DATA

NEXT RECEIVED ORDER

S403
INPUT ORDER-RECEIVED DATA

S404
REFERENCE PRODUCTION MASTER DATABASE

S405
DECIDE PRODUCTION (PROCESSING) SPACE AND PRODUCTION (PROCESSING) PERIOD FOR BOTTLENECK STEP

S406
WRITE TO PRODUCTION SPACE DATABASE (ALLOCATION)

S407
DECIDE PRODUCTION (PROCESSING) PERIOD/TIME OF DELIVERY

S408
NOTIFY CUSTOMER

S409
NOTIFY PRODUCTION (DYEING) PLANT

# FIG. 12

TIME OF DELIVERY
BOTTLENECK STEPS
OVERALL PROCESSING PERIOD (a)
BOTTLENECK STEP PROCESSING PERIOD (b)
PROCESSING PERIOD AFTER BOTTLENECK STEP (c)

S501
PROCESSING END DATE = TIME OF DELIVERY

S502
THIS DAY –
PROCESSING END DATE >
(a)?
NO
YES

S503
CAN
BOTTLENECK STEP SPACE
BE USED CONTINUOUSLY FROM DAY OF
(PROCESSING END DATE – (c))
FOR PERIOD (b)?
NO

S505
ADVANCE PROCESSING
END DATE BY ONE DAY

S504
YES
DECIDE PROCESSING
SPACE AND PROCESSING
PERIOD

S506
PROCESSING END DATE =
TIME OF DELIVERY + 1 DAY

S508
DELAY PROCESSING END
DATE BY ONE DAY
NO

S507
THIS DAY –
PROCESSING END DATE >
(a)?
YES

S510
DELAY PROCESSING END
DATE BY ONE DAY
NO

S509
CAN
BOTTLENECK STEP
SPACE BE USED CONTINUOUSLY
FROM DAY OF
(PROCESSING END DATE – (c))
FOR PERIOD (b)?
YES

S511
TENTATIVE DECISION OF
PROCESSING SPACE AND
PROCESSING PERIOD

# FIG. 13

RCEIVED ORDER DATA

PRODUCTION MASTER DATABASE
PROCESSING REFERENCE DATA

| | | PART NUMBER | TIME OF DELIVERY | | BOTTLENECK STEP | OVERALL PROCESSING PERIOD (a) | BOTTLENECK PROCESSING PERIOD (b) | PROCESSING PERIOD AFTER BOTTLENECK STEP (c) |
|---|---|---|---|---|---|---|---|---|
| (A) | ① | 100 | Ju.l. 20 | → | A | 10 | 1 | 5 |
| | ② | 200 | Ju.l. 20 | → | B | 12 | 1 | 11 |
| | ③ | 301 | Ju.l. 15 | → | C | 15 | 2 | 3 |

(B)

▨ : UNAVAILABLE

☐ : AVAILABLE (CAN BE ALLOCATED)

■ : ALREADY ALLOCATED